# EUROPEAN PATENT APPLICATION

(11) **EP 4 300 855 A1**
(43) Date of publication of application: **03.01.2024**
(21) Application number: 22773890.3
(22) Date of filing: 12.01.2022
(51) Int. Cl.: H04L 1/00

(54) **DATA TRANSMISSION METHOD, AND COMMUNICATION DEVICE AND SYSTEM**

(30) Priority: 24.03.2021 CN 202110315863
(71) Applicant: Huawei Technologies Co., Ltd., Shenzhen, Guangdong 518129 (CN)
(72) Inventor: LU, Yuchun, Shenzhen, Guangdong 518129 (CN); MA, Lin, Shenzhen, Guangdong 518129 (CN); LI, Liang, Shenzhen, Guangdong 518129 (CN)
(74) Representative: Epping - Hermann - Fischer
(86) International application number: PCT/CN2022/071642
(87) International publication number: WO 2022/199227

(57) **Abstract**

A data transmission method, a communications device, and a communications system are provided, and belong to the field of communications technologies. The method is performed by a first node, and the first node includes X encoding units that perform encoding in a first FEC mode. The method includes: first dividing, by the first node, to-be-encoded data into X groups of initial data, and encoding the X groups of initial data one by one by using the X encoding units, to obtain X groups of encoded data; and then distributing, by the first node, the X groups of encoded data to L links, to send the X groups of encoded data to a second node. Both X×N and X×K are integer multiples of L, N represents a length of a codeword of the first FEC mode, K represents a length of valid information bits in the codeword, and amounts of encoded data distributed to different links are the same. The data transmission method provided in this application is different from existing data transmission methods, and can resolve a problem that data transmission solutions are relatively undiversified, and can simplify a process of distributing encoded data. This application is applied to a communications device.

## Description

This application claims priority to Chinese Patent Application No. 202110315863.8, filed on March 24, 2021 and entitled "DATA TRANSMISSION METHOD, COMMUNICATIONS DEVICE, AND COMMUNICATIONS SYSTEM", which is incorporated herein by reference in its entirety.

### TECHNICAL FIELD

This application relates to the field of communication technologies, and in particular, to a data transmission method, a communications device, and a communications system.

### BACKGROUND

In the field of communications technologies, a rate of data transmission between nodes is increasingly higher. To ensure data transmission reliability, a node needs to perform error correction on data in a data transmission process.

Generally, a transmit end (one node) and a receive end (the other node) of data perform error correction on the data in a forward error correction (Forward Error Correction, FEC) mode. For example, the transmit end encodes data in an FEC mode, and then sends the encoded data to the receive end. After receiving the data, the receive end decodes the data in the FEC mode, to perform error correction on the data.

However, existing data transmission solutions are relatively undiversified.

### SUMMARY

This application provides a data transmission method, a communications device, and a communications system, to resolve a problem that data transmission solutions are relatively undiversified. Technical solutions are as follows.

According to a first aspect, a data transmission method is provided, where the method is performed by a first node, the first node includes X encoding units that perform encoding in a first FEC mode, X ≥ 1, and the method includes: first dividing, by the first node, to-be-encoded data into X groups of initial data, and encoding the X groups of initial data one by one by using the X encoding units, to obtain X groups of encoded data; and then distributing, by the first node, the X groups of encoded data to L links between the first node and a second node, to send the X groups of encoded data to the second node, where L ≥ 2. Both X×N and X×K are integer multiples of L, N represents a length of a first codeword of the first FEC mode, and K represents a length of valid information bits in the first codeword. Because both X×N and X×K are integer multiples of L, a total length of the X groups of encoded data obtained by the first node is also an integer multiple of L. Therefore, amounts of encoded data distributed by the first node to different links in the L links are the same.

The data transmission method is different from current data transmission methods, and therefore enriches data transmission manners. In addition, because both X×N and X×K are integer multiples of L, the total length of the X groups of encoded data obtained by the first node is an integer multiple of L, the first node may evenly and regularly distribute the X groups of encoded data to the L links, and start positions from which the first node distributes the X groups of encoded data each time are the same. Therefore, logic for the first node to distribute encoded data is simplified. For example, N is an integer multiple of 66 symbols, and K is an integer multiple of 64 symbols; or N is an integer multiple of 34 symbols, and K is an integer multiple of 32 symbols; or N is an integer multiple of 70 symbols, and K is an integer multiple of 64 symbols; or N is an integer multiple of 36 symbols, and K is an integer multiple of 32 symbols; or N is an integer multiple of 70 symbols, and K is an integer multiple of 68 symbols; or N is an integer multiple of 36 symbols, and K is an integer multiple of 34 symbols; or N is an integer multiple of 74 symbols, and K is an integer multiple of 68 symbols; or N is an integer multiple of 38 symbols, and K is an integer multiple of 34 symbols; or N is an integer multiple of 64 symbols, and K is an integer multiple of 60 symbols.

A type of a codeword of any FEC mode in embodiments of this application may be any type, for example, Reed Solomon (Reed Solomon, RS). This is not limited in embodiments of this application.

Optionally, both the first node and the second node may support a plurality of FEC modes, and the first FEC mode is any one of the plurality of FEC modes. In this way, regardless of which FEC mode in the plurality of FEC modes is used by the first node and the second node, the encoded data obtained by the first node through encoding may be evenly distributed to the L links, and start positions from which the first node distributes the X groups of encoded data each time are the same. Therefore, logic for the first node to distribute encoded data is simplified.

Optionally, when both the first node and the second node support a plurality of FEC modes, the first node and the second node may switch a used FEC mode in the plurality of FEC modes.

For example, the data transmission method further includes: before the to-be-encoded data is divided into the X groups of initial data, if a mode switching condition is met, switching, by the first node, a currently-used second FEC mode in the plurality of FEC modes to the first FEC mode; and sending an indication of the first FEC mode to the second node. The second node may switch the currently-used second FEC mode to the first FEC mode based on the indication of the first FEC mode.

For another example, the data transmission method further includes: before the to-be-encoded data is divided into the X groups of initial data, if a mode switching condition is met, switching, by the first node, a currently-used second FEC mode in the plurality of FEC modes to the first FEC mode, where the X groups of encoded data obtained through encoding performed in the first FEC mode by the first node carry an indication of the first FEC mode.

Optionally, when the indication of the first FEC mode is carried in encoded data (for example, encoded data obtained through encoding in the first FEC mode, or encoded data obtained through encoding in the second FEC mode), the indication of the first FEC mode includes an alignment marker (Alignment Marker, AM). The first FEC mode is indicated by using an AM in encoded data, to multiplex the AM. In this way, sending of the indication of the first FEC mode from the first node to the second node can be implemented, and a format of the existing encoded data does not need to be changed.

Further, an association relationship may exist between a codeword of an FEC mode before switching and that after switching. Switching from the second FEC mode to the first FEC mode is used as an example. It is assumed that a codeword of the first FEC mode is referred to as a first codeword, and a codeword of the second FEC mode is referred to as a second codeword. In this case, a length of the first codeword is a first multiple of a first reference length, and a length of valid information bits in the first codeword is the first multiple of a second reference length; and a length of the second codeword is a second multiple of the first reference length, and a length of valid information bits in the second codeword is the second multiple of the second reference length. If a length of a codeword of an FEC mode is N, and a length of valid information bits in the codeword is K, an overhead of the FEC mode is (N - K)/K. It can be learned from an overhead computing manner and the foregoing multiple relationship between a codeword of an FEC mode before switching and that after switching that, an overhead of the FEC mode before switching is the same as that after switching. In this way, it can be ensured that the overhead of the FEC mode before switching is the same as that after the FEC mode is switched, and a data transmission rate can remain unchanged in a process of switching the FEC mode, thereby avoiding impact of an overhead change after the FEC mode is switched on data transmission (for example, an overhead change after the FEC mode is switched causes a change in clock frequencies of the first node and the second node).

In addition, when the foregoing multiple relationship exists between a codeword of an FEC mode before switching and that after switching, at least a part of hardware resources can be shared between units that use the FEC modes before and after switching in nodes (for example, the first node and the second node). In this way, volumes of the first node and the second node can be reduced, and hardware resources in the nodes can be efficiently used.

Optionally, when the foregoing multiple relationship exists between the first codeword and the second codeword, the first reference length and the second reference length that are related to the multiple relationship may be implemented in a plurality of manners.

Optionally, switching of the FEC mode by the first node may be triggered by the second node. In this case, the data transmission method further includes: receiving, by the first node, a mode switching request sent by the second node; and determining, based on the mode switching request, whether a mode switching condition is met. Then, the first node can switch the second FEC mode to the first FEC mode when the mode switching condition is met.

Optionally, the mode switching request carries at least one of: state parameters of the L links and the indication of the first FEC mode.

Optionally, the plurality of FEC modes all have corresponding parameter ranges, the parameter ranges corresponding to the plurality of FEC modes do not overlap with each other, and the mode switching request carries state parameters of the L links; and when the state parameters fall outside a parameter range corresponding to the second FEC mode, the first node can determine that the mode switching condition is met. The data transmission method may further include: determining, by the first node, the first FEC mode based on the state parameters. The first node can then switch the second FEC mode to the determined first FEC mode. The state parameters fall within a parameter range corresponding to the first FEC mode.

Optionally, X ≤ 16, or X ≤ 32, for example, X = 1, 2, 4, 6, 8, 12, or 16.

According to a second aspect, a data transmission method is provided, where the method is performed by a second node, the second node includes X decoding units that perform decoding in a first FEC mode, X ≥ 1, and the method includes: receiving, by the second node, encoded data from L links between a first node and the second node, and combining the encoded data received from the L links, to obtain X groups of encoded data; and then decoding, by the second node, the X groups of encoded data one by one by using the X decoding units, to obtain X groups of initial data, and combining the X groups of initial data, to obtain to-be-encoded data of the first node. L≥ 2, both X×N and X×K are integer multiples of L, N represents a length of a first codeword of the first FEC mode, K represents a length of valid information bits in the first codeword, and amounts of encoded data received from different links are the same.

A process in which the second node combines the encoded data received from the L links is reverse to a process in which the first node distributes the X groups of encoded data to the L links. The second node may combine the received encoded data by using a step that is reverse to a step of distributing the encoded data by the first node, to obtain the X groups of encoded data. A process in which the second node combines the X groups of initial data is reverse to a process in which the first node divides the to-be-encoded data into the X groups of initial data. The second node may combine, by using a step that is reverse to a step in which the first node divides the to-be-encoded data into the X groups of initial data, the X groups of initial data into the to-be-encoded data. For example, N is an integer multiple of 66 symbols, and K is an integer multiple of 64 symbols; or N is an integer multiple of 34 symbols, and K is an integer multiple of 32 symbols; or N is an integer multiple of 70 symbols, and K is an integer multiple of 64 symbols; or N is an integer multiple of 36 symbols, and K is an integer multiple of 32 symbols; or N is an integer multiple of 70 symbols, and K is an integer multiple of 68 symbols; or N is an integer multiple of 36 symbols, and K is an integer multiple of 34 symbols; or N is an integer multiple of 74 symbols, and K is an integer multiple of 68 symbols; or N is an integer multiple of 38 symbols, and K is an integer multiple of 34 symbols; or N is an integer multiple of 64 symbols, and K is an integer multiple of 60 symbols.

Optionally, both the first node and the second node support a plurality of FEC modes, and the first FEC mode is any one of the plurality of FEC modes.

Optionally, when both the first node and the second node support a plurality of FEC modes, the first node and the second node may switch a used FEC mode in the plurality of FEC modes.

For example, the method further includes: before combining the encoded data received from the L links, receiving, by the second node, an indication that is of the first FEC mode and that is sent by the first node, and switching a currently-used second FEC mode in the plurality of FEC modes to the first FEC mode based on the indication of the first FEC mode.

For another example, when the X groups of encoded data obtained by the first node by performing encoding in the first FEC mode carry an indication of the first FEC mode, the method further includes: before combining the encoded data received from the L links, switching, by the second node, a currently-used second FEC mode in the plurality of FEC modes to the first FEC mode based on the indication of the first FEC mode carried in the X groups of encoded data.

Optionally, when the indication of the first FEC mode is carried in encoded data (for example, encoded data obtained through encoding in the first FEC mode, or encoded data obtained through encoding in the second FEC mode), the indication of the first FEC mode includes an AM. The first FEC mode is indicated by using an AM in encoded data, to multiplex the AM. In this way, sending of the indication of the first FEC mode from the first node to the second node can be implemented, and a format of the existing encoded data does not need to be changed.

Further, an association relationship may exist between a codeword of an FEC mode before switching and that after switching. Switching from the second FEC mode to the first FEC mode is used as an example. It is assumed that a codeword of the first FEC mode is referred to as a first codeword, and a codeword of the second FEC mode is referred to as a second codeword. In this case, a length of the first codeword is a first multiple of a first reference length, and a length of valid information bits in the first codeword is the first multiple of a second reference length; and a length of the second codeword is a second multiple of the first reference length, and a length of valid information bits in the second codeword is the second multiple of the second reference length. If a length of a codeword of an FEC mode is N, and a length of valid information bits in the codeword is K, an overhead of the FEC mode is (N - K)/K. It can be learned from an overhead computing manner and the foregoing multiple relationship between a codeword of an FEC mode before switching and that after switching that, an overhead of the FEC mode before switching is the same as that after switching. In this way, it can be ensured that the overhead of the FEC mode before switching is the same as that after the FEC mode is switched, and a data transmission rate can remain unchanged in a process of switching the FEC mode, thereby avoiding impact of an overhead change after the FEC mode is switched on data transmission (for example, an overhead change after the FEC mode is switched causes a change in clock frequencies of the first node and the second node).

In addition, when the foregoing multiple relationship exists between a codeword of an FEC mode before switching and that after switching, at least a part of hardware resources can be shared between units that use the FEC modes before and after switching in nodes (for example, the first node and the second node). In this way, volumes of the first node and the second node can be reduced, and hardware resources in the nodes can be efficiently used.

Optionally, when the foregoing multiple relationship exists between the first codeword and the second codeword, the first reference length and the second reference length that are related to the multiple relationship may be implemented in a plurality of manners.

Optionally, switching of an FEC mode between the first node and the second node may be triggered by the second node. For example, before receiving the indication that is of the first FEC mode and that is sent by the first node, the second node may send a mode switching request to the first node when a mode switching condition is met.

Optionally, the mode switching request carries state parameters of the L links and/or an identifier of the first FEC mode.

Optionally, the plurality of FEC modes all have corresponding parameter ranges, and the parameter ranges corresponding to the plurality of FEC modes do not overlap with each other; and before sending a mode switching request to the first node, the second node may obtain state parameters of the L links, and when the state parameters fall outside a parameter range corresponding to the second FEC mode, determine that the mode switching condition is met, where the mode switching request carries the state parameters.

Optionally, X ≤ 16, or X ≤ 32, for example, X = 1, 2, 4, 6, 8, 12, or 16.

According to a third aspect, a communications device is provided, where the communications device belongs to a first node, the communications device has X encoding units that perform encoding in a first FEC mode, X ≥ 1, and the communications device includes a processing module, an encoding module, and a first sending module. The processing module is configured to divide to-be-encoded data into X groups of initial data; the encoding module is configured to encode the X groups of initial data one by one by using the X encoding units, to obtain X groups of encoded data; and the first sending module is configured to distribute the X groups of encoded data to L links between the first node and a second node, to send the X groups of encoded data to the second node, where L ≥ 2; both X×N and X×K are integer multiples of L, N represents a length of a first codeword of the first FEC mode, K represents a length of valid information bits in the first codeword, and amounts of encoded data distributed to different links in the L links are the same. For example, N is an integer multiple of 66 symbols, and K is an integer multiple of 64 symbols; or N is an integer multiple of 34 symbols, and K is an integer multiple of 32 symbols; or N is an integer multiple of 70 symbols, and K is an integer multiple of 64 symbols; or N is an integer multiple of 36 symbols, and K is an integer multiple of 32 symbols; or N is an integer multiple of 70 symbols, and K is an integer multiple of 68 symbols; or N is an integer multiple of 36 symbols, and K is an integer multiple of 34 symbols; or N is an integer multiple of 74 symbols, and K is an integer multiple of 68 symbols; or N is an integer multiple of 38 symbols, and K is an integer multiple of 34 symbols; or N is an integer multiple of 64 symbols, and K is an integer multiple of 60 symbols.

Optionally, both the first node and the second node support a plurality of FEC modes, and the first FEC mode is any one of the plurality of FEC modes.

Optionally, when both the first node and the second node support a plurality of FEC modes, the first node and the second node may switch a used FEC mode in the plurality of FEC modes.

For example, the communications device further includes a first switching module and a second sending module. The first switching module is configured to: before the processing module divides the to-be-encoded data into the X groups of initial data, if a mode switching condition is met, switch a currently-used second FEC mode in the plurality of FEC modes to the first FEC mode; and the second sending module is configured to send an indication of the first FEC mode to the second node.

For another example, the communications device further includes a second switching module. The second switching module is configured to: before the processing module divides the to-be-encoded data into the X groups of initial data, if a mode switching condition is met, switch a currently-used second FEC mode in the plurality of FEC modes to the first FEC mode, where the X groups of encoded data carry an indication of the first FEC mode.

Optionally, when the indication of the first FEC mode is carried in encoded data (for example, encoded data obtained through encoding in the first FEC mode, or encoded data obtained through encoding in the second FEC mode), the indication of the first FEC mode includes an AM. The first FEC mode is indicated by using an AM in encoded data, to multiplex the AM. In this way, sending of the indication of the first FEC mode from the first node to the second node can be implemented, and a format of the existing encoded data does not need to be changed.

Optionally, the length of the first codeword is a first multiple of a first reference length, and the length of valid information bits in the first codeword is a first multiple of a second reference length; and a length of a second codeword of the second FEC mode is a second multiple of the first reference length, and a length of valid information bits in the second codeword is the second multiple of the second reference length.

Optionally, when the foregoing multiple relationship exists between the first codeword and the second codeword, the first reference length and the second reference length that are related to the multiple relationship may be implemented in a plurality of manners.

Optionally, switching of the FEC mode by the first node may be triggered by the second node. In this case, the communications device further includes a receiving module and a determining module. The receiving module is configured to receive a mode switching request sent by the second node; and the determining module is configured to determine, based on the mode switching request, whether a mode switching condition is met.

Optionally, the mode switching request carries at least one of: state parameters of the L links and the indication of the first FEC mode.

Optionally, the plurality of FEC modes all have corresponding parameter ranges, the parameter ranges corresponding to the plurality of FEC modes do not overlap with each other, and the mode switching request carries state parameters of the L links; the determining module is configured to: when the state parameters fall outside a parameter range corresponding to the second FEC mode, determine that the mode switching condition is met; and the communications device further includes: a determining module, configured to determine the first FEC mode based on the state parameters, where the state parameters fall within a parameter range corresponding to the first FEC mode.

Optionally, X ≤ 16, or X ≤ 32.

According to a fourth aspect, a communications device is provided, where the communications device belongs to a second node, the communications device has X decoding units that perform decoding in a first FEC mode, X ≥ 1, and the communications device includes: a first receiving module, a first processing module, a decoding module, and a second processing module. The receiving module is configured to receive encoded data from L links between a first node and the second node, where L ≥ 2; the first processing module is configured to combine the encoded data received from the L links to obtain X groups of encoded data; the decoding module is configured to decode the X groups of encoded data one by one by using the X decoding units, to obtain X groups of initial data; and the second processing module is configured to combine the X groups of initial data, to obtain to-be-encoded data of the first node; where both X×N and X×K are integer multiples of L, N represents a length of a first codeword of the first FEC mode, K represents a length of valid information bits in the first codeword, and amounts of encoded data received from different links are the same.

For example, N is an integer multiple of 66 symbols, and K is an integer multiple of 64 symbols; or N is an integer multiple of 34 symbols, and K is an integer multiple of 32 symbols; or N is an integer multiple of 70 symbols, and K is an integer multiple of 64 symbols; or N is an integer multiple of 36 symbols, and K is an integer multiple of 32 symbols; or N is an integer multiple of 70 symbols, and K is an integer multiple of 68 symbols; or N is an integer multiple of 36 symbols, and K is an integer multiple of 34 symbols; or N is an integer multiple of 74 symbols, and K is an integer multiple of 68 symbols; or N is an integer multiple of 38 symbols, and K is an integer multiple of 34 symbols; or N is an integer multiple of 64 symbols, and K is an integer multiple of 60 symbols.

Optionally, both the first node and the second node support a plurality of FEC modes, and the first FEC mode is any one of the plurality of FEC modes.

Optionally, when both the first node and the second node support a plurality of FEC modes, the first node and the second node may switch a used FEC mode in the plurality of FEC modes.

For example, the communications device further includes a second receiving module and a first switching module. The second receiving module is configured to: before the first processing module combines the encoded data received from the L links, receive an indication that is of the first FEC mode and that is sent by the first node; and the first switching module is configured to switch a currently-used second FEC mode in the plurality of FEC modes to the first FEC mode based on the indication of the first FEC mode.

For another example, the X groups of encoded data carry an indication of the first FEC mode; and the communications device further includes: a second switching module, configured to: before the first processing module combines the encoded data received from the L links, switch a currently-used second FEC mode in the plurality of FEC modes to the first FEC mode based on the indication of the first FEC mode.

Optionally, when the indication of the first FEC mode is carried in encoded data (for example, encoded data obtained through encoding in the first FEC mode, or encoded data obtained through encoding in the second FEC mode), the indication of the first FEC mode includes an AM. The first FEC mode is indicated by using an AM in encoded data, to multiplex the AM. In this way, sending of the indication of the first FEC mode from the first node to the second node can be implemented, and a format of the existing encoded data does not need to be changed.

Optionally, the length of the first codeword is a first multiple of a first reference length, and the length of valid information bits in the first codeword is a first multiple of a second reference length; and a length of a second codeword of the second FEC mode is a second multiple of the first reference length, and a length of valid information bits in the second codeword is the second multiple of the second reference length.

Optionally, when the foregoing multiple relationship exists between the first codeword and the second codeword, the first reference length and the second reference length that are related to the multiple relationship may be implemented in a plurality of manners.

Optionally, switching of the FEC mode by the first node may be triggered by the second node. In this case, the communications device further includes: a sending module, configured to: before the first switching module or the second switching module switches a currently-used second FEC mode in the plurality of FEC modes to the first FEC mode based on the indication of the first FEC mode, send a mode switching request to the first node when a mode switching condition is met. Optionally, the mode switching request carries state parameters of the L links and/or an identifier of the first FEC mode.

Optionally, the plurality of FEC modes all have corresponding parameter ranges, the parameter ranges corresponding to the plurality of FEC modes do not overlap with each other, and the communications device further includes: an obtaining module and a determining module, where the obtaining module is configured to: before the sending module sends a mode switching request to the first node, obtain state parameters of the L links; and the determining module is configured to: when the state parameters fall outside a parameter range corresponding to the second FEC mode, determine that the mode switching condition is met, where the mode switching request carries the state parameters.

Optionally, X ≤ 16, or X ≤ 32.

According to a fifth aspect, a communications device is provided. The communications device includes a processor and a memory. The memory stores a program, and the processor is configured to invoke the program stored in the memory, so that the communications device performs the data transmission method according to any one of the designs in the first aspect.

According to a sixth aspect, a communications device is provided. The communications device includes a processor and a memory. The memory stores a program, and the processor is configured to invoke the program stored in the memory, so that the communications device performs the data transmission method according to any one of the designs in the second aspect.

According to a seventh aspect, a communications system is provided, where the communications system includes a first node and a second node; and
the first node includes the communications device according to any one of the designs in the third aspect, and the second node includes the communications device according to any one of the designs in the fourth aspect; or the first node includes the communications device according to any one of the designs in the fifth aspect, and the second node includes the communications device according to any one of the designs in the sixth aspect.

According to an eighth aspect, a computer storage medium is provided. The computer storage medium stores a computer program. When the computer program runs on a computer, the computer is enabled to perform the data transmission method according to any one of the designs in the first aspect; or when the computer program runs on a computer, the computer is enabled to perform the data transmission method according to any one of the designs in the second aspect. According to a ninth aspect, a computer program product including instructions is provided. When the computer program product runs on a communications device, the communications device is enabled to perform the data transmission method according to any one of the designs in the first aspect; or when the computer program product runs on a communications device, the communications device is enabled to perform the data transmission method according to any one of the designs in the second aspect.

For technical effects brought by any one of the designs in the second aspect to the ninth aspect, refer to the technical effects brought by a corresponding design in the first aspect. Details are not described herein again.

### BRIEF DESCRIPTION OF DRAWINGS

FIG. 1 is a schematic diagram of a structure of a communications system according to an embodiment of this application;
FIG. 2 is a schematic diagram of a structure of a communications device according to an embodiment of this application;
FIG. 3 is a flowchart of a data transmission method according to an embodiment of this application;
FIG. 4 is a flowchart related to an FEC mode switching process in a data transmission method according to an embodiment of this application;
FIG. 5 is a schematic diagram of functional modules of a node according to an embodiment of this application;
FIG. 6 is a block diagram of a communications device according to an embodiment of this application; and
FIG. 7 is a block diagram of another communications device according to an embodiment of this application.

### DESCRIPTION OF EMBODIMENTS

To make principles and technical solutions of this application clearer, the following further describes implementations of this application in detail with reference to the accompanying drawings.

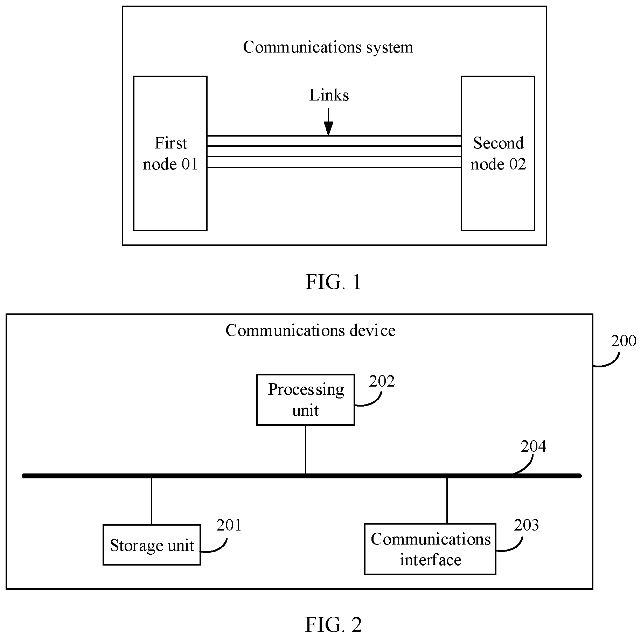

FIG. 1 is a schematic diagram of a structure of a communications system according to an embodiment of this application. As shown in FIG. 1, the communications system may include a plurality of nodes (for example, a first node 01 and a second node 02 in FIG. 1). It needs to be noted that, FIG. 1 shows merely two nodes in the communications system, and a quantity of nodes in the communications system may be greater than 2. For example, the quantity may be 10, 100, or 1000. This is not limited in this embodiment of this application.

The node may be any device that can perform data transmission, for example, a processor, an accelerator, a memory, an input/output (Input/Output, I/O) device, an Ethernet device, a server, a server cluster, a gateway, a router, a mobile phone, a tablet computer, a desktop computer, a security protection device, a smart screen, or an interface in an electronic device. The interface may be any interface, for example, an Ethernet interface or an Internet technology (Internet Technology, IT) interface. For example, the Ethernet interface may be a 40 gigabit Ethernet (Gigabit Ethernet, GE) /100 GE interface, a 200 GE/400 GE interface, or an 800 GE/1.6 Tbit/s Ethernet (Terabit Ethernet, TE) interface. The IT interface may be a peripheral component interconnect express (peripheral component interconnect express, PCIE) interface or the like. A rate of the IT interface may be any rate, such as 2.5 GT/s (Giga transaction per second, GT/s), 5 GT/s, 8 GT/s, 16 GT/s, 32 GT/s, or 64 GT/s.

Both the first node 01 and the second node 02 may be referred to as communications devices. For example, a communications device may include a processing unit. The processing unit is configured to: be coupled with a storage unit; and after reading instructions in the storage unit, perform, based on the instructions, the method that is performed by a communications device and that is described in embodiments of this application. There may be a plurality of processing units, and the storage unit coupled to the processing unit may be independent of the processing unit or independent of the communications device, or may be in the processing unit or in the communications device. The storage unit may be a physically independent unit, or may be storage space, a web disk, or the like on a cloud server. Optionally, there may be one or more storage units. When there are a plurality of storage units, they may be located at a same position or different positions, and may be used independently or collaboratively. For example, when the storage unit is located inside the communications device, refer to FIG. 2. FIG. 2 is a schematic diagram of a structure of a communications device 200 according to an embodiment of this application. The communications device 200 includes a processing unit 202 and a storage unit 201. The storage unit 201 is configured to store a program, and the processing unit 202 is configured to invoke the program stored in the storage unit 201, so that the communications device performs a corresponding method or function. Optionally, as shown in FIG. 2, the communications device 200 may further include at least one communications interface 203 and at least one communications bus 204. The storage unit 201, the processing unit 202, and the communications interface 203 are connected to and communicates with each other through the communications bus 204. The communications interface 203 is configured to communicate, under the control of the processing unit 202, with another device. The processing unit 202 may invoke, by using the communications bus 204, the program stored in the storage unit 201.

There is a connection relationship between nodes in the communications system, and data may be transmitted between the nodes based on the connection relationship. Each node in the communications system may be used as a transmit end (Transmitter, Tx) of data, or may be used as a receive end (Receiver, Rx) of data. In this embodiment of this application, an example is used, in which a first node 01 is a transmit end of data, and a second node 02 is a receive end of the data. With development of technologies, an amount of data transmitted between nodes is increasingly larger, and a data transmission rate is also increasingly higher. To ensure data transmission reliability, a node needs to perform error correction on data in a data transmission process. Generally, error correction is performed in an FEC manner on data between nodes. For example, the first node 01 sends data to the second node 02. The first node 01 may encode to-be-encoded data in an FEC mode, and send encoded data, which is obtained through encoding, to the second node 02. After receiving the encoded data, the second node 02 may decode the encoded data in the FEC mode. The first node 01 and the second node 02 are connected by using L links (lanes), where L ≥ 2. An example is used in which the first node 01 and the second node 02 in FIG. 1 are connected by using four links. The first node 01 may distribute the encoded data to the L links, to send the encoded data to the second node 02.

The links herein are logical links between the first node 01 and the second node 02, and are not physical links. The logical links herein have a correspondence (for example, a one-to-one correspondence; or certainly may not be a one-to-one correspondence) with physical links. After the first node 01 distributes the encoded data to the logical links, the first node 01 processes, based on the correspondence between the logical links and the physical links, the data distributed to the logical link, and distributes the processed data to corresponding physical links.

The encoded data obtained through encoding in an FEC mode includes a plurality of codewords of the FEC mode. For example, a codeword usually includes valid information bits and check bits, where the valid information bits are used to carry the to-be-encoded data, and the check bits are used to carry check data of the to-be-encoded data. The codeword may be represented as (N, K, T, M), where N represents a length of the codeword; K represents a length of the valid information bits in the codeword; T = (N - K)/2, T represents a check capability of check bits in the codeword, the check bits can be used to perform error correction on T symbols in the valid information bits, and T is an integer; and both the valid information bits and the check bits in the codeword include at least one symbol, and M represents a quantity of bits included in one symbol in the codeword. When distributing the encoded data to the links (the logical links), the first node may evenly distribute, at a granularity of symbols of the codewords in the encoded data, symbols in the encoded data to the links. However, lengths (for example, a quantity of symbols in a codeword) of the codewords in the encoded data are usually not integer multiples of a quantity of links. As a result, the first node cannot evenly distribute the encoded data to these links. In a case in which the lengths of the codewords are not integer multiples of the quantity of links, when distributing each codeword, the first node sequentially distributes symbols in the codeword to these links, and sequentially distributes, by using a next link of a link to which a last symbol in the codeword is distributed as a start position, symbols in a next codeword on these links. However, because the lengths of the codewords are not integer multiples of the quantity of links, start positions of at least some codewords, from which these codewords are distributed on these links, are different, causing relatively complex logic for the first node to distribute the encoded data to the links. Correspondingly, after receiving the encoded data, the second node further needs to restore, based on a rule for distributing the codewords by the first node, the received encoded data, also causing relatively complex logic for the second node to obtain the encoded data.

It can be learned that, in current data transmission solutions, the distribution logic of the first node is relatively complex, and the data transmission manners are relatively homogenous.

An embodiment of this application provides a data transmission method. The method is different from the foregoing data transmission method, and therefore enriches data transmission manners. In addition, in the data transmission method provided in this embodiment of this application, a first node has X encoding units (X ≥ 1) that perform encoding in a first FEC mode, and both X×N and X×K are integer multiples of L (where N represents a length of a first codeword of the first FEC mode, and K represents a length of valid information bits in the first codeword). Therefore, the first node may evenly distribute, to the L links, encoded data that is obtained through encoding performed by the X encoding units, and start positions from which the first node distributes the encoded data each time are the same. Therefore, logic for the first node to distribute encoded data is simplified.

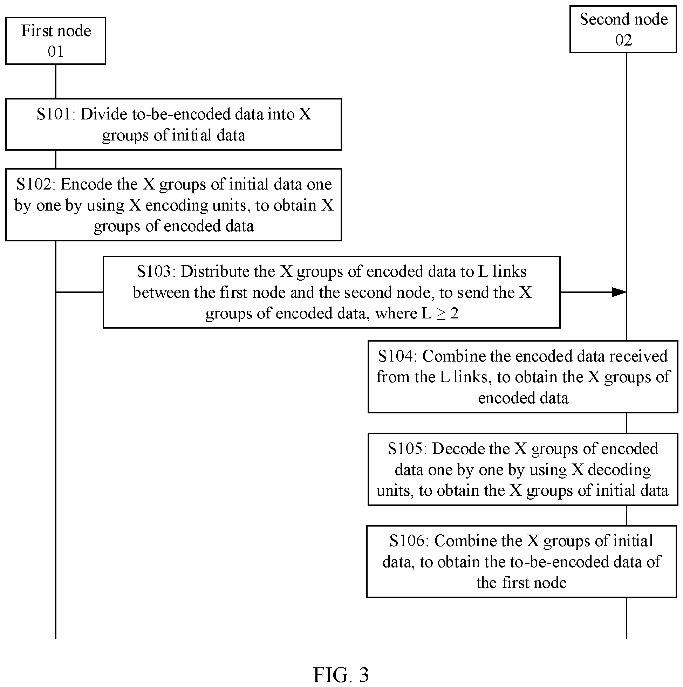

For example, FIG. 3 is a flowchart of a data transmission method according to an embodiment of this application. The data transmission method may be applied to a communications system (for example, the communications system shown in FIG. 1) provided in this embodiment of this application. Refer to FIG. 3. The data transmission method may include the following steps.

S101: A first node divides to-be-encoded data into X groups of initial data.

In this embodiment of this application, the first node supports a first FEC mode, and the first node includes X encoding units that perform encoding in the first FEC mode. In S101, the first node determines to use the first FEC mode for encoding. Therefore, the first node may divide, based on the quantity X of encoding units that perform encoding in the first FEC mode, to-be-encoded data into X groups of initial data.

It needs to be noted that the X encoding units in the first node have corresponding hardware resources, and each encoding unit in the X encoding units performs encoding in the first FEC mode based on a corresponding hardware resource. X≥1. When X is greater than 1, the hardware resources corresponding to the X encoding units may be independent of each other, or the X encoding units may share at least a part of the hardware resources with each other. This is not limited in this embodiment of this application.

A codeword of the first FEC mode may be referred to as a first codeword, the quantity X of encoding units that perform encoding in the first FEC mode in the first node is related to the first codeword, and X is further related to a quantity L of links between the first node and a second node. For example, both X×N and X×K are integer multiples of L. N represents a length of the first codeword, and K represents a length of valid information bits in the first codeword. Because a length of check bits in the first codeword is equal to the length of the first codeword minus the length of valid information bits in the first codeword, when both X×N and X×K are integer multiples of L, N - K represents the length of the check bits in the first codeword, and N - K is also an integer multiple of L.

For example, it is assumed that the length N of the first codeword is 64 symbols and the length K of the valid information bits in the first codeword is 60 symbols, N - K is equal to 4 symbols. When there are four links between the first node and the second node (that is, when L = 4), X may be equal to 1. In this case, 1 × 64, 1 × 60, and 1 × 4 are all integral multiples of 4.

When there are eight links between the first node and the second node (that is, when L = 8), X may be equal to 2; and 2 × 64, 2 × 60, and 2 × 4 are all integer multiples of 8.

In this embodiment of this application, the quantity X of encoding units may be disposed based on the first codeword and the link quantity L. Optionally, X ≤ 16, or X ≤ 32. For example, X may be 1, 2, 4, 8, 16, or the like.

It needs to be noted that L in this embodiment of this application is a quantity of links used for transmission of encoded data between the first node and the second node. The L links may be all links between the first node and the second node, or may be some links between the first node and the second node. This is not limited in this embodiment of this application.

S102: The first node encodes the X groups of initial data one by one by using X encoding units, to obtain X groups of encoded data.

After dividing the to-be-encoded data into the X groups of initial data, the first node may encode the X groups of initial data one by one by using the X encoding units, to obtain a group of encoded data output by each of the X encoding units, where there are altogether X groups of encoded data. For example, if X is equal to 2, the X encoding units include an encoding unit 1 and an encoding unit 2, and the X groups of initial data include a first group of initial data and a second group of initial data. In this case, the first node may encode the first group of initial data by using the encoding unit 1, to obtain a first group of encoded data; and the first node may further encode the second group of initial data by using the encoding unit 2, to obtain a second group of encoded data. S103: The first node distributes the X groups of encoded data to L links between the first node and a second node, to send the X groups of encoded data to the second node, where L ≥ 2.

Because both X×N and X×K are integer multiples of L, a total length of the X groups of encoded data obtained by the first node in S102 is an integer multiple of the quantity L of links, a total length of valid information bits in the X groups of encoded data is also an integer multiple of the quantity L of links, and a total length of check bits in the X groups of encoded data is also an integer multiple of the quantity L of links.

In this way, the first node may evenly distribute the X groups of encoded data to the L links between the first node and the second node, so that amounts (for example, quantities of symbols) of encoded data distributed by the first node to different links in the L links are the same, and amounts of encoded data received by the second node from different links are also the same.

For example, as shown in Table 1, it is assumed that the first codeword includes 64 symbols. First 60 symbols (for example, symbols A1 to A60 in Table 1) in the 64 symbols belong to valid information bits in the first codeword, and last four symbols (for example, symbols AP1 to AP4 in Table 1) belong to check bits in the first codeword. When there are four links (links 1, 2, 3, and 4 shown in Table 1) between the first node and the second node, X is equal to 1. In this case, 1 × 64, 1 × 60, and 1 × 4 are all integral multiples of 4.

The first node can obtain a group of encoded data in S102, and each first codeword in the group of encoded data may be distributed to the four links in a distribution manner shown in Table 1. In the distribution manner shown in Table 1, an (L × Y + 1)^{th} symbol in the 64 symbols is distributed to the link 1, an (L × Y + 2)^{th} symbol is distributed to the link 2, an (L × Y + 3)^{th} symbol is distributed to the link 3, and an (L × Y + 4)^{th} symbol is distributed to the link 4, where Y is an integer greater than or equal to 0.

**Table 1**

| Link 1 | Link 2 | Link 3 | Link 4 |
|---|---|---|---|
| A1 | A2 | A3 | A4 |
| A5 | A6 | A7 | A8 |
| A9 | A10 | A11 | A12 |
| A13 | A14 | A15 | A16 |
| A17 | A18 | A19 | A20 |
| A21 | A22 | A23 | A24 |
| A25 | A26 | A27 | A28 |
| A29 | A30 | A31 | A32 |
| A33 | A34 | A3 5 | A36 |
| A37 | A3 8 | A39 | A40 |
| A41 | A42 | A43 | A44 |
| A45 | A46 | A47 | A48 |
| A49 | A50 | A51 | A52 |
| A53 | A54 | A55 | A56 |
| A57 | A58 | A59 | A60 |
| AP1 | AP2 | AP3 | AP4 |

Optionally, the 64 symbols shown in Table 1 may be distributed in another manner. This is not limited in this embodiment of this application.

For example, the 64 symbols shown in Table 1 may be distributed to the four links in a distribution manner shown in Table 2. In the distribution manner shown in Table 2, the 64 symbols are divided into four consecutive sets of symbols in sequence, each set of symbols includes 16 symbols, and the four sets of symbols are distributed one by one to the four links.

**Table 2**

| Link 1 | Link 2 | Link 3 | Link 4 |
|---|---|---|---|
| A1 | A17 | A33 | A49 |
| A2 | A18 | A34 | A50 |
| A3 | A19 | A3 5 | A51 |
| A4 | A20 | A36 | A52 |
| A5 | A21 | A37 | A53 |
| A6 | A22 | A3 8 | A54 |
| A7 | A23 | A39 | A55 |
| A8 | A24 | A40 | A56 |
| A9 | A25 | A41 | A57 |
| A10 | A26 | A42 | A58 |
| A11 | A27 | A43 | A59 |
| A12 | A28 | A44 | A60 |
| A13 | A29 | A45 | AP1 |
| A14 | A30 | A46 | AP2 |
| A15 | A31 | A47 | AP2 |
| A16 | A32 | A48 | AP4 |

For another example, it is assumed that the first codeword includes 64 symbols, where first 60 symbols in the 64 symbols belong to valid information bits in the first codeword, and last four symbols belong to check bits in the first codeword. When there are eight links (links 1, 2, 3, 4, 5, 6, 7, and 8 shown in Table 3) between the first node and the second node, X is equal to 2. In this case, 2 × 64, 2 × 60, and 2 × 4 are all integral multiples of 8. The first node can obtain two groups of encoded data in S102. When distributing the two groups of encoded data to the eight links, the first node may perform interleaving on codewords in the two groups of encoded data. For example, the first node may separately extract a first codeword from the two groups of encoded data, and distribute, to the eight links in an interleaving manner, every two first codewords extracted from the two groups of encoded data.

Refer to Table 3. A first codeword A extracted by the first node from a group of encoded data includes 64 symbols. In the 64 symbols, first 60 symbols (for example, symbols A1 to A60 in Table 3) belong to valid information bits, and last four symbols (for example, symbols AP1 to AP4 in Table 3) belong to check bits. A first codeword B extracted by the first node from another group of encoded data includes 64 symbols. In the 64 symbols, first 60 symbols (for example, symbols B1 to B60 in Table 3) belong to valid information bits, and last four symbols (for example, symbols BP1 to BP4 in Table 3) belong to check bits.

The two first codewords (A and B) may be distributed to the eight links in a distribution manner shown in Table 3. In the distribution manner shown in Table 3, in the 64 symbols of the first codeword A, an (L × Y + 1)^{th} symbol is distributed to the link 1, an (L × Y + 5)^{th} symbol is distributed to the link 2, an (L × Y + 2)^{th} symbol is distributed to the link 3, an (L × Y + 6)^{th} symbol is distributed to the link 4, an (L × Y + 3)^{th} symbol is distributed to the link 5, an (L × Y + 7)^{th} symbol is distributed to the link 6, an (L × Y + 4)^{th} symbol is distributed to the link 7, and an (L × Y + 8)^{th} symbol is distributed to the link 8; and in the 64 symbols of the first codeword B, an (L × Y + 5)^{th} symbol is distributed to the link 1, an (L × Y + 1)^{th} symbol is distributed to the link 2, an (L × Y + 6)^{th} symbol is distributed to the link 3, an (L × Y + 2)^{th} symbol is distributed to the link 4, an (L × Y + 7)^{th} symbol is distributed to the link 5, an (L × Y + 3)^{th} symbol is distributed to the link 6, an (L × Y + 8)^{th} symbol is distributed to the link 7, and an (L × Y + 4)^{th} symbol is distributed to the link 8.

**Table 3**

| Link 1 | Link 2 | Link 3 | Link 4 | Link 5 | Link 6 | Link 7 | Link 8 |
|---|---|---|---|---|---|---|---|
| A1 | B1 | A2 | B2 | A3 | B3 | A4 | B4 |
| B5 | A5 | B6 | A6 | B7 | A7 | B8 | A8 |
| A9 | B9 | A10 | B10 | A11 | B11 | A12 | B12 |
| B13 | A13 | B14 | A14 | B15 | A15 | B16 | A16 |
| A17 | B17 | A18 | B18 | A19 | B19 | A20 | B20 |
| B21 | A21 | B22 | A22 | B23 | A23 | B24 | A24 |
| A25 | B25 | A26 | B26 | A27 | B27 | A28 | B28 |
| B29 | A29 | B30 | A30 | B31 | A31 | B32 | A32 |
| A33 | B33 | A34 | B34 | A3 5 | B35 | A36 | B36 |
| B37 | A37 | B37 | A37 | B38 | A3 8 | B40 | A40 |
| A41 | B41 | A42 | B42 | A43 | B43 | A44 | B44 |
| B45 | A45 | B46 | A46 | B47 | A47 | B48 | A48 |
| A49 | B49 | A50 | B50 | A51 | B51 | A52 | B52 |
| B53 | A53 | B54 | A54 | B55 | A55 | B56 | A56 |
| A57 | B57 | A58 | B58 | A59 | B59 | A60 | B60 |
| BP1 | AP1 | BP2 | AP2 | BP3 | AP3 | BP4 | AP4 |

Optionally, the 128 symbols shown in Table 3 may be distributed in another manner. This is not limited in this embodiment of this application.

For example, the 128 symbols shown in Table 3 may be distributed to the eight links in a distribution manner shown in Table 4. In the distribution manner shown in Table 4, the 64 symbols of the first codeword A are divided into four consecutive sets of symbols in sequence, each set of symbols includes 16 symbols, and the four sets of symbols are distributed one by one to four links (the link 1, the link 3, the link 5, and the link 7). The 64 symbols of the first codeword B are also divided into four consecutive sets of symbols in sequence, each set of symbols includes 16 symbols, and the four sets of symbols are distributed one by one to the other four links (the link 2, the link 4, the link 6, and the link 8).

**Table 4**

| Link 1 | Link 2 | Link 3 | Link 4 | Link 5 | Link 6 | Link 7 | Link 8 |
|---|---|---|---|---|---|---|---|
| A1 | B1 | A17 | B17 | A33 | B33 | A49 | B49 |
| A2 | B2 | A18 | B18 | A34 | B34 | A50 | B50 |
| A3 | B3 | A19 | B19 | A3 5 | B35 | A51 | B51 |
| A4 | B4 | A20 | B20 | A36 | B36 | A52 | B52 |
| A5 | B5 | A21 | B21 | A37 | B37 | A53 | B53 |
| A6 | B6 | A22 | B22 | A3 8 | B38 | A54 | B54 |
| A7 | B7 | A23 | B23 | A39 | B39 | A55 | B55 |
| A8 | B8 | A24 | B24 | A40 | B40 | A56 | B56 |
| A9 | B9 | A25 | B25 | A41 | B41 | A57 | B57 |
| A10 | B10 | A26 | B26 | A42 | B42 | A58 | B58 |
| A11 | B11 | A27 | B27 | A43 | B43 | A59 | B59 |
| A12 | B12 | A28 | B28 | A44 | B44 | A60 | B60 |
| A13 | B13 | A29 | B29 | A45 | B45 | AP1 | BP1 |
| A14 | B14 | A30 | B30 | A46 | B46 | AP2 | BP2 |
| A15 | B15 | A31 | B31 | A47 | B47 | AP2 | BP2 |
| A16 | B16 | A32 | B32 | A48 | B48 | AP4 | BP4 |

S104: The second node combines the encoded data received from the L links, to obtain the X groups of encoded data.

Similar to the first node, the second node supports the first FEC mode, and the second node includes X decoding units that perform decoding in the first FEC mode. After receiving, from the L links, the encoded data sent by the first node, the second node may combine the encoded data based on a currently-used first FEC mode, to obtain the X groups of encoded data in S102. A process in which the second node combines the encoded data received from the L links is reverse to a process in which the first node distributes the X groups of encoded data to the L links. The second node may combine the received encoded data by using a step that is reverse to a step of distributing the encoded data by the first node, to obtain the X groups of encoded data. Details are not described herein in this embodiment of this application.

It needs to be noted that, the X decoding units in the second node have corresponding hardware resources, and each decoding unit in the X decoding units performs decoding in the first FEC mode based on a corresponding hardware resource. When X is greater than 1, the hardware resources corresponding to the X decoding units may be independent of each other, or the X decoding units may share a part of the hardware resources with each other. This is not limited in this embodiment of this application.

S105: The second node decodes the X groups of encoded data one by one by using X decoding units, to obtain the X groups of initial data.

After obtaining the X groups of encoded data, the second node may decode the X groups of encoded data one by one by using the X decoding units, to obtain the X groups of initial data.

For example, if X is equal to 2, the X decoding units include a decoding unit 1 and a decoding unit 2, and the X groups of encoded data include a first group of encoded data and a second group of encoded data. In this case, the first node may decode the first group of encoded data by using the decoding unit 1, to obtain a first group of initial data, and the first node may further decode the second group of encoded data by using the decoding unit 2, to obtain a second group of initial data. It needs to be noted that, each decoding unit in the X decoding units decodes a corresponding group of encoded data by using the first FEC mode; and in a process of decoding the group of encoded data by using the first FEC mode, the decoding unit can implement error correction on the group of encoded data, to improve transmission quality of the encoded data.

S106: The second node combines the X groups of initial data, to obtain the to-be-encoded data of the first node.

After obtaining the X groups of initial data, the second node may combine the X groups of initial data, to obtain the to-be-encoded data of the first node in S101. A process in which the second node combines the X groups of initial data is reverse to a process in which the first node divides the to-be-encoded data into the X groups of initial data in S101. The second node may combine, by using a step that is reverse to a step in which the first node divides the to-be-encoded data into the X groups of initial data, the X groups of initial data into the to-be-encoded data.

In this way, the second node obtains the to-be-encoded data of the first node, and transmission of the to-be-encoded data from the first node to the second node is implemented.

In conclusion, in the data transmission method provided in this embodiment of this application, a first node divides, based on a quantity X of encoding units that perform encoding in a first FEC mode, to-be-encoded data into X groups of initial data; then the first node encodes the X groups of initial data one by one by using the X encoding units, to obtain X groups of encoded data, and distributes the X groups of encoded data to L links between the first node and a second node, to send the X groups of encoded data to the second node. The data transmission method is different from current data transmission methods, and therefore enriches data transmission manners.

In addition, in the data transmission method provided in this embodiment of this application, because both X×N and X×K are integer multiples of L, a total length of the X groups of encoded data obtained by the first node is an integer multiple of L, the first node can evenly and regularly distribute the X groups of encoded data to the L links, and start positions from which the first node distributes the X groups of encoded data each time are the same. Therefore, logic for the first node to distribute encoded data is simplified.

In the foregoing embodiment, both the first node and the second node support the first FEC mode. Optionally, both the first node and the second node may support a plurality of FEC modes, and the first FEC mode is any one of the plurality of FEC modes.

It can be learned that, for each FEC mode in the plurality of FEC modes, the first node includes at least one encoding unit that performs encoding in the FEC mode, and the second node includes at least one decoding unit that performs decoding in the FEC mode. In addition, for a length N of a codeword of the FEC mode, a length K of valid information bits in the codeword, a quantity X of encoding units that perform encoding in the FEC mode in the first node (or a quantity X of decoding units that perform decoding in the FEC mode in the second node), and a quantity L of links used for transmitting encoded data between the first node and the second node, the following association relationship exists between the four parameters: both X×N and X×K are integer multiples of L.

In this way, regardless of which FEC mode in the plurality of FEC modes is used by the first node and the second node, the encoded data obtained by the first node through encoding can be evenly distributed to the L links, and start positions from which the first node distributes the encoded data each time are the same. Therefore, logic for the first node to distribute encoded data is simplified. When both the first node and the second node support a plurality of FEC modes, the first node and the second node may switch a used FEC mode in the plurality of FEC modes. The following describes an FEC mode switching process by using an example in which the first node and the second node switch from a currently-used second FEC mode to the first FEC mode.

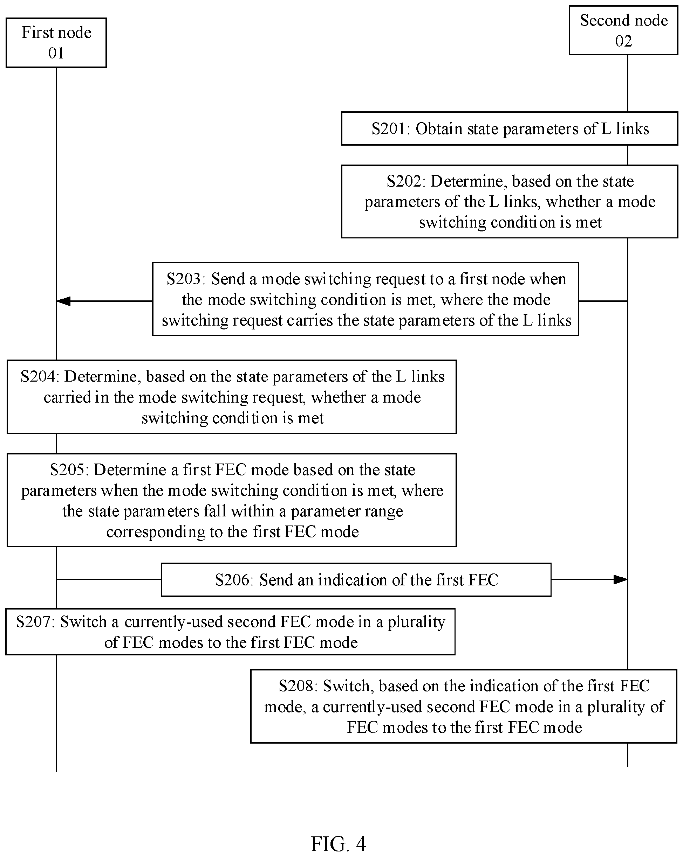

For example, FIG. 4 is a flowchart related to an FEC mode switching process in a data transmission method according to an embodiment of this application. As shown in FIG. 4, the FEC mode switching process may include the following steps.

S201: A second node obtains state parameters of L links.

In a process of data transmission between a first node and the second node, the second node may decode received data by using a second FEC mode. In this process, the second node may further obtain state parameters of L links, where the L links are used for transmitting encoded data between the first node and the second node.

The state parameters of the L links are used to reflect transmission quality of the L links. For example, the state parameters may include at least one of parameters such as a bit error rate, a packet loss rate, and a frame error rate. This is not limited in this embodiment of this application. S202: The second node determines, based on the state parameters of the L links, whether a mode switching condition is met. If the mode switching condition is met, S203 is performed; or if the mode switching condition is not met, S201 is performed.

Optionally, the mode switching condition may be: the state parameters of the L links fall within a parameter range corresponding to a currently-used second FEC mode. A plurality of FEC modes supported by both the first node and the second node have corresponding parameter ranges, and the parameter ranges corresponding to the plurality of FEC modes do not overlap with each other. The parameter ranges are ranges of the state parameters of the L links.

On one hand, if the state parameters of the L links fall within the parameter range corresponding to the currently-used second FEC mode, it indicates that the mode switching condition is not met. In this case, the second node may perform S201 again.

On the other hand, if the state parameters of the L links fall outside the parameter range corresponding to the currently-used second FEC mode, it indicates that the mode switching condition is met. In this case, the second node may perform S203.

For example, the state parameters are bit error rates. If bit error rates of the L links are 20%, and the parameter range corresponding to the second FEC mode is (5%, 10%], the second node may determine that the bit error rates of the L links are beyond the parameter range corresponding to the second FEC mode. In this case, the mode switching condition is met.

In this embodiment of this application, an example is used, in which the mode switching condition is that the state parameters of the L links fall within a parameter range corresponding to a currently-used second FEC mode. Optionally, the mode switching condition may be implemented in another manner. This is not limited in this embodiment of this application.

S203: The second node sends a mode switching request to a first node, where the mode switching request carries the state parameters of the L links.

When determining that the mode switching condition is met, the second node can determine that the current second FEC mode is not applicable to current states of the L links.

For example, current transmission quality of the L links is relatively poor, and an error correction capability of the second FEC mode cannot improve the transmission quality to relatively high transmission quality. In this case, if the second FEC mode is used, relatively high data transmission quality cannot be ensured.

For another example, current transmission quality of the L links is relatively high, an error correction capability of the second FEC mode is sufficient, and the second FEC mode is over-designed. In this case, if the second FEC mode is used, a data transmission delay is relatively high, and power consumption of the first node and the second node is relatively high.

In this case, the second node may send a mode switching request to the first node, to trigger the first node and the second node to switch the currently-used second FEC mode.

S204: The first node determines, based on the state parameters of the L links carried in the mode switching request, whether a mode switching condition is met. If the mode switching condition is met, S205 is performed.

The mode switching request sent by the second node carries the state parameters of the L links. In S204, the first node may determine, based on the state parameters, whether a mode switching condition is met. For a process in which the first node determines, based on the state parameters, whether the mode switching condition is met, refer to the foregoing process in which the second node determines, based on the state parameters, whether the mode switching condition is met. Details are not described herein in this embodiment of this application.

When determining that the mode switching condition is met, the first node may perform a subsequent step, to perform FEC mode switching.

On the contrary, when determining that the mode switching condition is not met, the first node may not need to perform a subsequent step, and may continue to encode data by using the current second FEC mode. Correspondingly, the second node may continue to decode data by using the second FEC mode.

S205: The first node determines a first FEC mode based on the state parameters, where the state parameters fall within a parameter range corresponding to the first FEC mode.

When determining that the mode switching condition is met, the first node may select, based on the state parameters of the L links, a first FEC mode from the plurality of FEC modes, where the state parameters of the L links fall within a parameter range corresponding to the first FEC mode. It can be learned that, the first FEC mode is applicable to current transmission quality of the L links; and use of the first FEC mode in a current state of the L links can ensure relatively high data transmission quality and can also avoid a problem that a relatively high data transmission delay and relatively high node power consumption are caused by FEC mode over-design.

For example, the state parameters are bit error rates. It is assumed that the plurality of FEC modes include FEC modes 1, 2, and 3. Parameter ranges corresponding to the three modes are shown in Table 5, and the parameter ranges are bit error rate ranges. In FIG. 5, 1E-13 represents a negative thirteenth power of ten, 1E-11 represents a negative eleventh power of ten, 1E-10 represents a negative tenth power of ten, 1E-8 represents a negative eighth power of ten, 1E-7 represents a negative seventh power of ten, and 1E-4 represents a negative fourth power of ten. If the bit error rates of the L links are 1E-5 (indicating a negative fifth power of ten), the first node can determine that the bit error rate 1E-5 is within a parameter range from 1E-7 to 1E-4 corresponding to an FEC mode 3, and then determine that the FEC mode 3 is the first FEC mode.

**Table 5**

| FEC Mode | Parameter range corresponding to the FEC mode |
|---|---|
| 1 | 1E-13 to 1E-11 |
| 2 | 1E-10 to 1E-8 |
| 3 | 1E-7 to 1E-4 |

S206: The first node sends an indication of the first FEC mode to the second node.

After determining the first FEC mode, the first node may further send an indication of the first

FEC mode to the second node, to instruct the second node to switch the FEC mode of the second node to the first FEC mode.

For example, the indication of the first FEC mode may be carried in a control code stream and sent to the second node, or may be carried in encoded data that is obtained through encoding in the second FEC mode and sent to the second node. This is not limited in this embodiment of this application.

Optionally, when the indication of the first FEC mode is carried in encoded data, the indication of the first FEC mode may be an AM in the encoded data. In this embodiment of this application, the first FEC mode is indicated by using an AM in encoded data, to multiplex the AM. In this way, sending of the indication of the first FEC mode from the first node to the second node can be implemented, and a format of the existing encoded data does not need to be changed.

An AM is usually used for data alignment. When an AM is used to indicate the first FEC mode, a code pattern of the AM is different from a code pattern of an AM used for data alignment. In other words, in this embodiment of this application, a format of an AM used to indicate the first FEC mode is the same as a format of an AM used for data alignment, but values of the two types of AMs are different, so that the two types of AMs may have different functions. It can be learned that, in addition to a data alignment function, an AM may further have a function of carrying an indication of the first FEC mode.

It needs to be noted that, when the indication of the first FEC mode is carried in the encoded data, the indication of the first FEC mode may be carried in another portion rather than an AM. This is not limited in this embodiment of this application.

S207: The first node switches a currently-used second FEC mode in a plurality of FEC modes to the first FEC mode.

After determining the first FEC mode, the first node may switch a currently-used second FEC mode to the first FEC mode. Then the first node may perform data transmission with reference to the method shown in FIG. 3.

S208: The second node switches, based on the indication of the first FEC mode, a currently-used second FEC mode in a plurality of FEC modes to the first FEC mode.

After receiving the indication that is of the first FEC mode and that is sent by the first node, the second node may determine the first FEC mode based on the indication, switch a currently-used second FEC mode to the first FEC mode, and then perform data transmission with reference to the method shown in FIG. 3.

It needs to be noted that, before the first node sends the indication of the first FEC mode, all encoded data transmitted to the second node is encoded in the second FEC mode; and after the first node sends the indication of the first FEC mode, all encoded data transmitted to the second node is encoded in the first FEC mode. Before receiving the indication of the first FEC mode, the second node decodes received encoded data by using the second FEC mode; and after receiving the indication of the first FEC mode, the second node decodes received encoded data by using the first FEC mode.

For example, the first node encodes, by using the second FEC mode, data before an AM that indicates the first FEC mode; and encodes data that follows the AM by using the first FEC mode. The second node decodes data before the AM by using the second FEC mode, and decodes data that follows the AM by using the first FEC mode.

The foregoing uses an example in which the first node uses, immediately after sending the indication of the first FEC mode, the first FEC mode to perform encoding, and the second node uses, immediately after receiving the indication of the first FEC mode, the first FEC mode to perform decoding. Optionally, the first node may alternatively use, a specific data interval later after the indication of the first FEC mode is sent, the first FEC mode to perform encoding; and correspondingly, the second node uses, the specific data interval after the indication of the first FEC mode is received, the first FEC mode to perform decoding. It can be learned that the second node correspondingly switches the FEC mode based on a rule for switching the FEC mode by the first node.

In this way, the first node and the second node do not need to interrupt transmission of encoded data in an FEC mode switching process, thereby avoiding impact of FEC mode switching on data transmission.

The second FEC mode may be an initial FEC mode used by the first node and the second node. Certainly, the second FEC mode may alternatively be an FEC mode after switching from the initial FEC mode. The initial FEC mode may be an FEC mode determined by the first node and the second node in a negotiation manner.

For example, the initial FEC mode may alternatively be an FEC mode (for example, an FEC mode configured based on link quality) preconfigured by working personnel on the first node and the second node.

For another example, before the first node and the second node perform transmission of service data (for example, the foregoing encoded data), the first node may send test data to the second node, and the second node may feed back the state parameters of the L links to the first node based on the test data. In this case, the first node may determine the second FEC mode based on the state parameters with reference to S205, and send an indication of the second FEC mode to the second node with reference to S206. Then both the first node and the second node may perform service data transmission in the second FEC mode.

There may be another implementation of the data transmission method shown in FIG. 4. The following describes another implementation by using an example.

In a possible implementation, the first node may not perform S206, but directly perform S207; and after S207 is performed, an indication of the first FEC mode is carried by using a start portion of encoded data that is obtained through encoding in the first FEC mode. After receiving the encoded data, the second node may switch the second FEC mode to the first FEC mode based on the indication of the first FEC mode carried in the start portion of the encoded data. Then the second node uses the first FEC mode to decode a portion that follows the indication of the first FEC mode in the encoded data. Optionally, the start portion of encoded data that is obtained through encoding in the first FEC mode may alternatively carry, by using an AM, the indication of the first FEC mode.

In a possible implementation, the mode switching condition used for determination by the first node may be different from the mode switching condition used for determination by the second node. This is not limited in this embodiment of this application.

In a possible implementation, on a basis of the method shown in FIG. 4, alternatively the second node may determine the first FEC mode with reference to S205; and the mode switching request in S203 carries an indication of the first FEC mode. Optionally, the first node may not perform S205, and the mode switching condition used for determination by the first node in S204 may further include that the first node supports the first FEC mode.

In a possible implementation, when determining, in S202, that the mode switching condition is met, the second node further needs to determine the first FEC mode with reference to S205; and the mode switching request sent to the first node in S203 does not carry the state parameters, but carries the indication of the first FEC mode. After receiving the mode switching request, the first node may not perform S205, and the mode switching condition used for determination by the first node in S204 may be that the first node supports the first FEC mode.

In a possible implementation, the second node may not determine whether the mode switching condition is met. In this case, the second node does not need to perform S202 and S203, but directly sends the state parameters determined in S201 to the first node, so that the first node performs S204, S205, S206, and S207 based on the state parameters. The state parameters may be carried in the mode switching request and sent to the first node, or may be carried in another message and sent to the first node. This is not limited in this embodiment of this application. In addition, the second node may periodically send the state parameters to the first node, or may send the state parameters to the first node only when a condition is met.

It can be learned that, if the second node sends a mode switching request to the first node, the mode switching request may carry at least one of: the state parameters of the L links, and the indication of the first FEC mode.

In a possible implementation, the determining, by the first node, whether the mode switching condition is met may be triggered not by the second node. For example, the second node does not need to perform S201, S202, and S203; and the first node may determine, in S204, whether the mode switching condition is met, not based on the state parameters of the L links carried in the mode switching request. This is not limited in this embodiment of this application.

In a possible implementation, when the state parameters of the L links fall outside a parameter range corresponding to the second FEC mode, if transmission quality reflected by a parameter in the parameter range corresponding to the second FEC mode is higher than transmission quality reflected by the state parameters of the L links, the first node and the second node may not switch the second FEC mode to the first FEC mode. It may be understood that, when the second FEC mode has an over-design problem, the first node and the second node may not switch the second FEC mode to the first FEC mode.

The data transmission method provided in embodiments of this application supports FEC mode switching. Further, an association relationship may exist between a codeword of an FEC mode before switching and that after switching.

Switching from the second FEC mode to the first FEC mode is used as an example. It is assumed that a codeword of the first FEC mode is referred to as a first codeword, and a codeword of the second FEC mode is referred to as a second codeword. In this case, a length of the first codeword is a first multiple of a first reference length, and a length of valid information bits in the first codeword is the first multiple of a second reference length; and a length of the second codeword is a second multiple of the first reference length, and a length of valid information bits in the second codeword is the second multiple of the second reference length.

In other words, both a length of a codeword of an FEC mode before switching and that after switching are multiples of a first reference length, and a length of valid information bits in the codeword of the FEC mode before switching and that after switching are also multiples of a second reference length. In addition, for each FEC mode before and after switching, a length of a codeword of the FEC mode is a multiple of the first reference length, that is, a length of valid information bits in the codeword is a multiple of the second reference length.

For example, it is assumed that the length of the first codeword is 64 symbols, the length of valid information bits in the first codeword is 60 symbols, the length of the second codeword is 128 symbols, the length of valid information bits in the second codeword is 120 symbols, the first reference length is 64 symbols, and the second reference length is 60 symbols. It can be learned that, the length of the first codeword is one time the first reference length, the length of valid information bits in the first codeword is one time the second reference length, the length of the second codeword is twice the first reference length, and the length of valid information bits in the second codeword is twice the second reference length.

If a length of a codeword of an FEC mode is N, and a length of valid information bits in the codeword is K, an overhead of the FEC mode is (N - K)/K. It can be learned from an overhead computing manner and the foregoing multiple relationship between a codeword of an FEC mode before switching and that after switching that, an overhead of the FEC mode before switching is the same as that after switching. In this way, it can be ensured that the overhead of the FEC mode before switching is the same as that after the FEC mode is switched, and a data transmission rate can remain unchanged in a process of switching the FEC mode, thereby avoiding impact of an overhead change after the FEC mode is switched on data transmission (for example, an overhead change after the FEC mode is switched causes a change in clock frequencies of the first node and the second node).

In addition, when the foregoing multiple relationship exists between a codeword of an FEC mode before switching and that after switching, at least a part of hardware resources can be shared between units that use the FEC modes before and after switching in nodes (for example, the first node and the second node). In this way, volumes of the first node and the second node can be reduced, and hardware resources in the nodes can be efficiently used.

Switching may be performed between a plurality of FEC modes supported by both the first node and the second node, and the foregoing multiple relationship may exist between all codewords of these FEC modes. In this way, switching between any two FEC modes in the plurality of FEC modes does not cause a change of overheads, and at least a part of hardware resources can be shared between these FEC modes.

Optionally, when the foregoing multiple relationship exists between all codewords of these FEC modes, the first reference length and the second reference length that are related to the multiple relationship may be implemented in a plurality of manners.

For example, N is an integer multiple of 66 symbols, and K is an integer multiple of 64 symbols.

In this case, the first reference length is 66 symbols, the second reference length is 64 symbols, and the plurality of FEC modes supported by the first node and the second node may be FEC modes shown in Table 6. Refer to Table 6. N represents a length of a codeword of an FEC mode, K represents a length of valid information bits in a codeword of the FEC mode, T = (N - K)/2, T represents a check capability of check bits in the codeword of the FEC mode, and the check bits can be used to perform error correction on T symbols in the valid information bits; and M represents a quantity of bits included in one symbol in the codeword of the FEC mode. Table 6 shows information about FEC modes 1.1, 1.2, 1.3, and 1.4. The first node may perform FEC mode switching between the four FEC modes.

Alternatively, N is an integer multiple of 34 symbols, and K is an integer multiple of 32 symbols. In this case, the first reference length is 34 symbols, the second reference length is 32 symbols, and the plurality of FEC modes supported by the first node and the second node may be FEC modes shown in Table 7. For an explanation of Table 7, refer to the explanation of Table 6. Table 7 is not described in detail herein in this embodiment of this application.

Alternatively, N is an integer multiple of 70 symbols, and K is an integer multiple of 64 symbols. In this case, the first reference length is 70 symbols, the second reference length is 64 symbols, and the plurality of FEC modes supported by the first node and the second node may be FEC modes shown in Table 8. For an explanation of Table 8, refer to the explanation of Table 6. Table 8 is not described in detail herein in this embodiment of this application.

Alternatively, N is an integer multiple of 36 symbols, and K is an integer multiple of 32 symbols. In this case, the first reference length is 36 symbols, the second reference length is 32 symbols, and the plurality of FEC modes supported by the first node and the second node may be FEC modes shown in Table 9. For an explanation of Table 9, refer to the explanation of Table 6. Table 9 is not described in detail herein in this embodiment of this application.

Alternatively, N is an integer multiple of 70 symbols, and K is an integer multiple of 68 symbols. In this case, the first reference length is 70 symbols, the second reference length is 68 symbols, and the plurality of FEC modes supported by the first node and the second node may be FEC modes shown in Table 10. For an explanation of Table 10, refer to the explanation of Table 6. Table 10 is not described in detail herein in this embodiment of this application.

Alternatively, N is an integer multiple of 36 symbols, and K is an integer multiple of 34 symbols. In this case, the first reference length is 36 symbols, the second reference length is 34 symbols, and the plurality of FEC modes supported by the first node and the second node may be FEC modes shown in Table 11. For an explanation of Table 11, refer to the explanation of Table 6. Table 11 is not described in detail herein in this embodiment of this application.

Alternatively, N is an integer multiple of 74 symbols, and K is an integer multiple of 68 symbols. In this case, the first reference length is 74 symbols, the second reference length is 68 symbols, and the plurality of FEC modes supported by the first node and the second node may be FEC modes shown in Table 12. For an explanation of Table 12, refer to the explanation of Table 6. Table 12 is not described in detail herein in this embodiment of this application.

Alternatively, N is an integer multiple of 38 symbols, and K is an integer multiple of 34 symbols. In this case, the first reference length is 38 symbols, the second reference length is 34 symbols, and the plurality of FEC modes supported by the first node and the second node may be FEC modes shown in Table 13. For an explanation of Table 13, refer to the explanation of Table 6. Table 13 is not described in detail herein in this embodiment of this application.

Alternatively, N is an integer multiple of 64 symbols, and K is an integer multiple of 60 symbols. In this case, the first reference length is 64 symbols, the second reference length is 60 symbols, and the plurality of FEC modes supported by the first node and the second node may be FEC modes shown in Table 14. For an explanation of Table 14, refer to the explanation of Table 6. Table 14 is not described in detail herein in this embodiment of this application.

**Table 6**

| FEC mode | N | K | T | M |
|---|---|---|---|---|
| 1.1 | 528 | 512 | 8 | 10 |
| 1.2 | 264 | 256 | 4 | 10 |
| 1.3 | 132 | 128 | 2 | 8 |
| 1.4 | 66 | 64 | 1 | 8 |

**Table 7**

| FEC mode | N | K | T | M |
|---|---|---|---|---|
| 2.1 | 544 | 512 | 16 | 10 |
| 2.2 | 272 | 256 | 8 | 10 |
| 2.3 | 136 | 128 | 4 | 8 |
| 2.4 | 68 | 64 | 2 | 8 |
| 2.5 | 34 | 32 | 1 | 8 |

**Table 8**

| FEC mode | N | K | T | M |
|---|---|---|---|---|
| 3.1 | 560 | 512 | 24 | 10 |
| 3.2 | 280 | 256 | 12 | 10 |
| 3.3 | 140 | 128 | 6 | 8 |
| 3.4 | 70 | 64 | 3 | 8 |

**Table 9**

| FEC mode | N | K | T | M |
|---|---|---|---|---|
| 4.1 | 576 | 512 | 32 | 10 |
| 4.2 | 288 | 256 | 16 | 10 |
| 4.3 | 144 | 128 | 8 | 8 |
| 4.4 | 72 | 64 | 4 | 8 |
| 4.5 | 36 | 32 | 2 | 8 |

**Table 10**

| FEC mode | N | K | T | M |
|---|---|---|---|---|
| 5.1 | 560 | 544 | 8 | 10 |
| 5.2 | 280 | 272 | 4 | 10 |
| 5.3 | 140 | 136 | 2 | 8 |
| 5.4 | 70 | 68 | 1 | 8 |

**Table 11**

| FEC mode | N | K | T | M |
|---|---|---|---|---|
| 6.1 | 576 | 544 | 16 | 10 |
| 6.2 | 288 | 272 | 8 | 10 |
| 6.3 | 144 | 136 | 4 | 8 |
| 6.4 | 72 | 68 | 2 | 8 |
| 6.5 | 36 | 34 | 1 | 8 |

**Table 12**

| FEC mode | N | K | T | M |
|---|---|---|---|---|
| 7.1 | 592 | 544 | 24 | 10 |
| 7.2 | 296 | 272 | 12 | 10 |
| 7.3 | 148 | 136 | 6 | 8 |
| 7.4 | 74 | 68 | 3 | 8 |

**Table 13**

| FEC mode | N | K | T | M |
|---|---|---|---|---|
| 8.1 | 608 | 544 | 32 | 10 |
| 8.2 | 304 | 272 | 16 | 10 |
| 8.3 | 152 | 136 | 8 | 8 |
| 8.4 | 76 | 68 | 4 | 8 |
| 8.5 | 38 | 34 | 2 | 8 |

**Table 14**

| FEC mode | N | K | T | M |
|---|---|---|---|---|
| 9.1 | 512 | 480 | 16 | 10 |
| 9.2 | 256 | 240 | 8 | 10 |
| 9.3 | 128 | 120 | 4 | 8 |
| 9.4 | 64 | 60 | 2 | 8 |

A type of a codeword of any FEC mode in embodiments of this application may be any type, for example, Reed Solomon (Reed Solomon, RS). This is not limited in embodiments of this application.

Further, all FEC modes supported by the first node may be the same as or different from all FEC modes supported by the second node. Before performing the foregoing data transmission method, the first node and the second node may send capability information to each other, to notify each other of FEC modes supported by the first node and the second node. Then the first node and the second node may determine, based on the FEC modes supported by themselves, the foregoing plurality of FEC modes supported by both of them.

In conclusion, in the data transmission method provided in embodiments of this application, a first node divides, based on a quantity X of encoding units that perform encoding in a first FEC mode, to-be-encoded data into X groups of initial data. Then the first node encodes the X groups of initial data one by one by using the X encoding units, to obtain X groups of encoded data, and distributes the X groups of encoded data to L links between the first node and a second node, to send the X groups of encoded data to the second node. The data transmission method is different from current data transmission methods, and therefore enriches data transmission manners.

In addition, in the data transmission method provided in embodiments of this application, because both X×N and X×K are integer multiples of L, a total length of the X groups of encoded data obtained by the first node is an integer multiple of L, the first node may evenly and regularly distribute the X groups of encoded data to the L links, and start positions from which the first node distributes the X groups of encoded data each time are the same. Therefore, logic for the first node to distribute encoded data is simplified.

In addition, the first node and the second node can switch between a plurality of FEC modes. Both a length of a codeword of an FEC mode before switching and that after switching are multiples of a first reference length, and a length of valid information bits in the codeword of the FEC mode before switching and that after switching are also multiples of a second reference length. In addition, for each FEC mode before and after switching, a length of a codeword of the FEC mode is a multiple of the first reference length, that is, a length of valid information bits in the codeword is a multiple of the second reference length. Therefore, an overhead of the FEC mode before switching is the same as that after switching. In this way, it can be ensured that the overhead of the FEC mode before switching is the same as that after the FEC mode is switched, thereby avoiding impact of an overhead change after the FEC mode is switched on data transmission (for example, an overhead change after the FEC mode is switched causes a change in clock frequencies of the first node and the second node).

Further, in this application, when a mode switching condition is met, FEC mode switching may be performed, so that a current FEC mode matches current transmission quality of the L links. For example, when the current transmission quality of the L links is relatively poor, an FEC mode with a relatively strong error correction capability may be used, to improve transmission quality and implement a high gain of data transmission. For another example, when the current transmission quality of the L links is relatively high, an FEC mode with a relatively low error correction capability may be used, so that a data transmission delay is reduced as much as possible on a condition of ensuring data transmission quality, to reduce power consumption of the first node and the second node. It can be learned that, according to the data transmission method provided in embodiments of this application, relatively high data transmission quality can be ensured, and a relatively low data transmission delay and relatively low node power consumption can be ensured. For example, codewords of the foregoing plurality of FEC modes are different, error correction capabilities of these FEC modes are different, data transmission delays caused by these FEC modes are different, and node power consumption caused by these FEC modes is also different. Therefore, a parameter range corresponding to each FEC mode may be designed according to characteristics of these FEC modes, so that each FEC mode is applicable to L links having state parameters in a corresponding parameter range. In this way, an appropriate FEC mode may be selected based on different state parameters of the L links, to implement relatively high data transmission quality, a relatively low data transmission delay, and relatively low node power consumption.

It can be learned that, according to the data transmission method provided in embodiments of this application, a used FEC mode can be flexibly adjusted based on transmission quality of links, so that the data transmission method can be applicable to links with various transmission quality, and can effectively improve transmission quality of links when burst transmission quality of the links decreases.

For example, codewords of the foregoing plurality of FEC modes may be as shown in Table 15. It can be learned that a multiple relationship exists between codewords of these FEC modes, so that overheads of these FEC modes are consistent, and a data rate may remain unchanged during FEC mode switching, thereby simplifying a clock solution. In addition, for N, K, and T in Table 15, N × X, K × X, and T × X may all be integer multiples of the link quantity L, to simplify data distributing logic of a node. M in codewords of FEC modes in a same FEC mode group may be consistent as much as possible. For example, M1 and M2 are the same, and M3 and M4 are the same. In embodiments of this application, M may be 8 or 10. The FEC modes shown in Table 15 may be divided into two FEC mode groups: a low-latency group and a high-gain group. The low-latency group includes FEC modes 1 and 2, and the high-gain group includes FEC modes 3 and 4. A codeword of an FEC mode in the low-delay group is relatively short, and a caused data transmission delay is relatively low. A codeword of an FEC mode in the high gain group is relatively long, and an error correction capability is relatively strong. When a node uses an FEC mode in the low-latency group, a relatively low data transmission delay can be ensured. When the node uses an FEC mode in the high-gain group, relatively high data transmission quality can be ensured, and a relatively high data transmission gain can be ensured.

**Table 15**

| FEC mode group | FEC mode | N | K | T | M |
|---|---|---|---|---|---|
| Low-latency group | 1 | N | K | T | M1 |
| | 2 | 2N | 2K | 2T | M2 |
| High gain group | 3 | 4N | 4K | 4T | M3 |
| | 4 | 8N | 8K | 8T | M4 |

In the foregoing embodiments, an example is used in which the first node is a transmit end and the second node is a receive end. Optionally, the first node may serve as a receive end, and the second node may serve as a transmit end. It can be learned that each node may serve as both a transmit end and a receive end. In this case, each node generates encoded data based on to-be-encoded data with reference to the first node, and sends the encoded data to another node. Each node may further decode received encoded data (referred to as to-be-decoded data) with reference to the second node, to obtain decoded data.

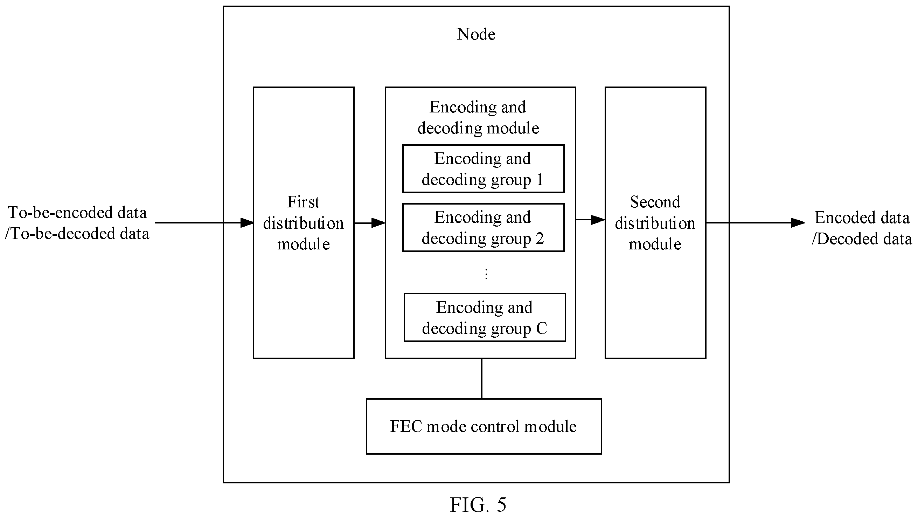

For example, FIG. 5 is a schematic diagram of function modules of a node according to an embodiment of this application. As shown in FIG. 5, the node includes a first distribution module, a second distribution module, an encoding and decoding module, and an FEC mode control module. The encoding and decoding module includes C encoding and decoding groups, where C > 1. The C encoding and decoding groups are in a one-to-one correspondence with the foregoing plurality of FEC modes, and an encoding and decoding group corresponding to each FEC mode includes: at least one encoding and decoding unit (not shown in FIG. 5) configured to perform encoding and decoding in the FEC mode. The FEC mode control module is configured to: determine a currently-used FEC mode, control a group of encoding and decoding units to be in a working state, where the group of encoding and decoding units correspond to the FEC mode and are in the encoding and decoding module; and control encoding and decoding units that are not in the group of encoding and decoding units to be in a non-working state.

On one hand, the first distribution module is configured to divide to-be-encoded data into a plurality of groups of initial data, and input the plurality of groups of initial data one by one to a plurality of encoding and decoding units in a working state in the encoding and decoding module. The encoding and decoding units encode the input initial data, to obtain a plurality of groups of encoded data, and input the plurality of groups of encoded data to the second distributing module.

The second distribution module is configured to evenly distribute the input plurality of groups of encoded data to a plurality of links.

On the other hand, the first distribution module is further configured to input received to-be-decoded data (including a plurality of groups of encoded data) to a plurality of encoding and decoding units one by one in a working state in the encoding and decoding module. The encoding and decoding units decode the input encoded data, to obtain a plurality of groups of decoded data (similar to the foregoing initial data), and output the decoded data to the second distribution module. The second distribution module is configured to combine the decoded data into one piece of decoded data (similar to the foregoing to-be-encoded data).

The foregoing describes in detail the data transmission method provided in this application with reference to FIG. 1 to FIG. 5. It may be understood that, to implement functions described in the foregoing methods, a device needs to include corresponding hardware and/or software modules for performing the functions. This application can be implemented in a form of hardware or a combination of hardware and computer software with reference to execution processes of the methods described in embodiments disclosed in this specification. Whether a function is performed by hardware or hardware driven by computer software depends on particular applications and design constraints of a technical solution. A person skilled in the art may use different manners to implement the described functions for each particular application with reference to embodiments, but it should not be considered that the implementation goes beyond the scope of this application.

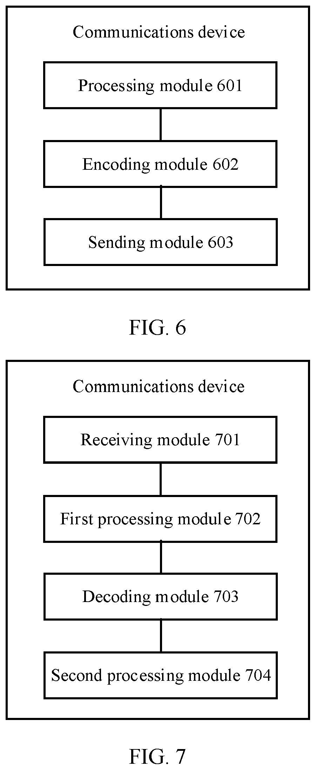

In this embodiment, a corresponding device may be divided into function modules based on the foregoing method embodiments. For example, function modules may be obtained through division based on corresponding functions, or two or more functions may be integrated into one processing module. The integrated module may be implemented in a form of hardware. It needs to be noted that in this embodiment, division into the modules is an example, and is specifically a possible logical function division. During actual implementation, another division manner may be used. When the function module division manner is used, with reference to FIG. 6 and FIG. 7, the following describes a communications device provided in this application.

FIG. 6 is a block diagram of a communications device according to an embodiment of this application. For example, the communications device may belong to the first node in the foregoing embodiments. The communications device has X encoding units that perform encoding in a first FEC mode, where X ≥ 1. As shown in FIG. 6, the communications device includes a processing module 601, an encoding module 602, and a first sending module 603.

The processing module 601 is configured to divide to-be-encoded data into X groups of initial data. For operations that the processing module 601 is configured to perform, refer to content related to the first node in S101.

The encoding module 602 is configured to encode the X groups of initial data one by one by using the X encoding units, to obtain X groups of encoded data. For operations that the encoding module 602 is configured to perform, refer to content related to the first node in S102.

The first sending module 603 is configured to distribute the X groups of encoded data to L links between a first node and a second node, to send the X groups of encoded data to the second node, where L ≥ 2. For operations that the first sending module 603 is configured to perform, refer to content related to the first node in S103.

Both X×N and X×K are integer multiples of L, N represents a length of a first codeword of the first FEC mode, K represents a length of valid information bits in the first codeword, and amounts of encoded data distributed to different links in the L links are the same.

Optionally, both the first node and the second node support a plurality of FEC modes, and the first FEC mode is any one of the plurality of FEC modes.

Optionally, when both the first node and the second node support a plurality of FEC modes, the first node and the second node may switch a used FEC mode in the plurality of FEC modes.

For example, the communications device further includes a first switching module and a second sending module (neither shown in FIG. 6). The first switching module is configured to: before the processing module divides the to-be-encoded data into the X groups of initial data, if a mode switching condition is met, switch a currently-used second FEC mode in the plurality of FEC modes to the first FEC mode; and the second sending module is configured to send an indication of the first FEC mode to the second node. For operations that the first switching module is configured to perform, refer to content related to the first node in S207. For operations that the second sending module is configured to perform, refer to content related to the first node in S206. For another example, the communications device further includes a second switching module (not shown in FIG. 6). The second switching module is configured to: before the processing module divides the to-be-encoded data into the X groups of initial data, if a mode switching condition is met, switch a currently-used second FEC mode in the plurality of FEC modes to the first FEC mode, where the X groups of encoded data carry an indication of the first FEC mode. Optionally, when the indication of the first FEC mode is carried in encoded data (for example, encoded data obtained through encoding in the first FEC mode, or encoded data obtained through encoding in the second FEC mode), the indication of the first FEC mode includes an AM. The first FEC mode is indicated by using an AM in encoded data, to multiplex the AM. In this way, sending of the indication of the first FEC mode from the first node to the second node can be implemented, and a format of the existing encoded data does not need to be changed.

Optionally, the length of the first codeword is a first multiple of a first reference length, and the length of valid information bits in the first codeword is a first multiple of a second reference length; and a length of a second codeword of the second FEC mode is a second multiple of the first reference length, and a length of valid information bits in the second codeword is the second multiple of the second reference length.

Optionally, when the foregoing multiple relationship exists between the first codeword and the second codeword, the first reference length and the second reference length that are related to the multiple relationship may be implemented in a plurality of manners.

For example, N is an integer multiple of 66 symbols, and K is an integer multiple of 64 symbols; or N is an integer multiple of 34 symbols, and K is an integer multiple of 32 symbols; or N is an integer multiple of 70 symbols, and K is an integer multiple of 64 symbols; or N is an integer multiple of 36 symbols, and K is an integer multiple of 32 symbols; or N is an integer multiple of 70 symbols, and K is an integer multiple of 68 symbols; or N is an integer multiple of 36 symbols, and K is an integer multiple of 34 symbols; or N is an integer multiple of 74 symbols, and K is an integer multiple of 68 symbols; or N is an integer multiple of 38 symbols, and K is an integer multiple of 34 symbols; or N is an integer multiple of 64 symbols, and K is an integer multiple of 60 symbols.

Optionally, switching of the FEC mode by the first node may be triggered by the second node. In this case, the communications device further includes a receiving module and a determining module (neither shown in FIG. 6). The receiving module is configured to receive a mode switching request sent by the second node; and the determining module is configured to determine, based on the mode switching request, whether a mode switching condition is met. For operations that the receiving module is configured to perform, refer to content related to the first node in S203. For operations that the determining module is configured to perform, refer to content related to the first node in S204.

Optionally, the mode switching request carries at least one of: state parameters of the L links and the indication of the first FEC mode.

Optionally, the plurality of FEC modes all have corresponding parameter ranges, the parameter ranges corresponding to the plurality of FEC modes do not overlap with each other, and the mode switching request carries state parameters of the L links; the determining module is configured to: when the state parameters fall outside a parameter range corresponding to the second FEC mode, determine that the mode switching condition is met; and the communications device further includes: a determining module, configured to determine the first FEC mode based on the state parameters, where the state parameters fall within a parameter range corresponding to the first FEC mode.

Optionally, X ≤ 16, or X ≤ 32.

FIG. 7 is a block diagram of another communications device according to an embodiment of this application. For example, the communications device may belong to the second node in the foregoing embodiments. The communications device has X decoding units that perform decoding in a first FEC mode, where X ≥ 1. As shown in FIG. 7, the communications device includes: a first receiving module 701, a first processing module 702, a decoding module 703, and a second processing module 704.

The receiving module 701 is configured to receive encoded data from L links between a first node and a second node, where L ≥ 2. For operations that the receiving module 701 is configured to perform, refer to content related to the second node in S103.

The first processing module 702 is configured to combine the encoded data received from the L links, to obtain X groups of encoded data. For operations that the first processing module 702 is configured to perform, refer to content related to the second node in S104.

The decoding module 703 is configured to decode the X groups of encoded data one by one by using the X decoding units. For operations that the decoding module 703 is configured to perform, refer to content related to the second node in S105.

The second processing module 704 is configured to combine the X groups of initial data, to obtain to-be-encoded data of the first node. For operations that the second processing module 704 is configured to perform, refer to content related to the second node in S106.

Both X×N and X×K are integer multiples of L, N represents a length of a first codeword of the first FEC mode, K represents a length of valid information bits in the first codeword, and amounts of encoded data received from different links are the same.

Optionally, both the first node and the second node support a plurality of FEC modes, and the first FEC mode is any one of the plurality of FEC modes.

Optionally, when both the first node and the second node support a plurality of FEC modes, the first node and the second node may switch a used FEC mode in the plurality of FEC modes.

For example, the communications device further includes a second receiving module and a first switching module (neither shown in FIG. 7). The second receiving module is configured to: before the first processing module combines the encoded data received from the L links, receive an indication that is of the first FEC mode and that is sent by the first node; and the first switching module is configured to switch a currently-used second FEC mode in the plurality of FEC modes to the first FEC mode based on the indication of the first FEC mode. For operations that the second receiving module is configured to perform, refer to content related to the second node in S206. For operations that the first switching module is configured to perform, refer to content related to the second node in S208.

For another example, the X groups of encoded data carry an indication of the first FEC mode; and the communications device further includes: a second switching module (not shown in FIG. 7), configured to: before the first processing module combines the encoded data received from the L links, switch a currently-used second FEC mode in the plurality of FEC modes to the first FEC mode based on the indication of the first FEC mode.

Optionally, when the indication of the first FEC mode is carried in encoded data (for example, encoded data obtained through encoding in the first FEC mode, or encoded data obtained through encoding in the second FEC mode), the indication of the first FEC mode includes an AM. The first FEC mode is indicated by using an AM in encoded data, to multiplex the AM. In this way, sending of the indication of the first FEC mode from the first node to the second node can be implemented, and a format of the existing encoded data does not need to be changed.

Optionally, the length of the first codeword is a first multiple of a first reference length, and the length of valid information bits in the first codeword is a first multiple of a second reference length; and a length of a second codeword of the second FEC mode is a second multiple of the first reference length, and a length of valid information bits in the second codeword is the second multiple of the second reference length.

Optionally, when the foregoing multiple relationship exists between the first codeword and the second codeword, the first reference length and the second reference length that are related to the multiple relationship may be implemented in a plurality of manners.

For example, N is an integer multiple of 66 symbols, and K is an integer multiple of 64 symbols; or N is an integer multiple of 34 symbols, and K is an integer multiple of 32 symbols; or N is an integer multiple of 70 symbols, and K is an integer multiple of 64 symbols; or N is an integer multiple of 36 symbols, and K is an integer multiple of 32 symbols; or N is an integer multiple of 70 symbols, and K is an integer multiple of 68 symbols; or N is an integer multiple of 36 symbols, and K is an integer multiple of 34 symbols; or N is an integer multiple of 74 symbols, and K is an integer multiple of 68 symbols; or N is an integer multiple of 38 symbols, and K is an integer multiple of 34 symbols; or N is an integer multiple of 64 symbols, and K is an integer multiple of 60 symbols.

Optionally, switching of the FEC mode by the first node may be triggered by the second node. In this case, the communications device further includes: a sending module (not shown in FIG. 7), configured to: before the first switching module or the second switching module switches a currently-used second FEC mode in the plurality of FEC modes to the first FEC mode based on the indication of the first FEC mode, send a mode switching request to the first node when a mode switching condition is met. For operations that the sending module is configured to perform, refer to content related to the second node in S203.

Optionally, the mode switching request carries state parameters of the L links and/or an identifier of the first FEC mode.

Optionally, the plurality of FEC modes all have corresponding parameter ranges, the parameter ranges corresponding to the plurality of FEC modes do not overlap with each other, and the communications device further includes: an obtaining module and a determining module (neither shown in FIG. 7), where the obtaining module is configured to: before the sending module sends a mode switching request to the first node, obtain state parameters of the L links; and the determining module is configured to: when the state parameters do not belong to a parameter range corresponding to the second FEC mode, determine that the mode switching condition is met, where the mode switching request carries the state parameters. For operations that the obtaining module is configured to perform, refer to content related to the second node in S201. For operations that the determining module is configured to perform, refer to content related to the second node in S202.

Optionally, X ≤ 16, or X ≤ 32.

When an integrated unit is used, the communications device that belongs to the first node or the second node and that is provided in this application may include a processing module, a storage module, and a communications module. The processing module may be configured to control and manage actions of the communications device. For example, the processing module may be configured to support the communications device in performing actions performed by the first node or the second node in S101 to S106, or may be configured to support the communications device in performing actions performed by the first node or the second node in S201 to S208. The storage module may be configured to support the communications device in storing program code, data, and the like. The communications module may be configured to perform communications between the communications device and another device.

The processing module may be a processor or a controller, and the processing module may implement or execute various example logical blocks, modules, and circuits described with reference to content disclosed in this application. The processor may alternatively be a combination for implementing a computing function, for example, a combination including one or more microprocessors or a combination of a digital signal processor (digital signal processor, DSP) and a microprocessor. The storage module may be a memory. The communications module may be specifically a device, for example, a radio frequency circuit, a Bluetooth chip, a Wi-Fi chip, or the like that interacts with another device.

In an embodiment, when the processing module is a processor, the storage module is a memory, and the communications module is a communications interface, the communications device in this embodiment may be a communications device having the structure shown in FIG. 2. In an implementation, the foregoing modules and the like included in the communications device may be a computer program stored in a memory, and the computer program is invoked by a processor to implement corresponding executable functions of the modules.

An embodiment of this application further provides a communications system. The communications system includes the first node and the second node.

An embodiment of this application provides a computer storage medium. The computer storage medium stores a computer program. When the computer program runs on a computer, the computer is enabled to perform the method performed by the first node or the second node in any one of the data transmission methods provided in embodiments of this application.

An embodiment of this application further provides a computer program product including instructions. When the computer program product runs on a communications device, the communications device is enabled to perform the method performed by the first node or the second node in any one of the data transmission methods provided in embodiments of this application. All or some of the foregoing embodiments may be implemented by software, hardware, firmware, or any combination thereof. When software is used for implementation, all or some of embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a computer network, or another programmable apparatus. The computer instructions may be stored in a computer-readable storage medium, or transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage apparatus, such as a server or a data center, integrating one or more usable media. The usable medium may be a magnetic medium (for example, a floppy disk, a hard disk, or a magnetic tape), an optical medium, a semiconductor medium (for example, a solid-state drive), or the like.

In this application, the terms "first", "second", and the like are merely intended for description, but cannot be understood as an indication or implication of relative importance. The term "at least one" refers to one or more, and the term "a plurality of" refers to two or more, unless expressly limited otherwise.

For different types of embodiments such as the method embodiments and the device embodiments provided in embodiments of this application, reference may be made to each other. This is not limited in embodiments of this application. A sequence of operations of the method embodiments provided in embodiments of this application can be properly adjusted, and operations can be correspondingly added or deleted based on a situation. Any method that can be easily figured out by a person skilled in the art within a technical scope disclosed in this application shall fall within the protection scope of this application. Therefore, details are not described again.

In corresponding embodiments provided in this application, it needs to be understood that the disclosed system, devices, and the like may be implemented in other composition manners. For example, the described device embodiments are merely examples. For example, division into modules is merely logical function division. During actual implementation, there may be another division manner. For example, a plurality of modules may be combined or integrated into another system, or some features may be ignored or not performed. In addition, displayed or discussed mutual couplings or direct couplings or communication connections may be implemented by using some interfaces. Indirect couplings or communication connections between the devices or modules may be implemented in electronic or other forms.

The units described as separate parts may or may not be physically separate, and parts described as units may or may not be physical units, may be located in one location, or may be distributed on a plurality of devices. Some or all of the units may be selected depending on actual requirements to achieve the objectives of the solutions in embodiments.

The foregoing descriptions are merely specific embodiments of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A data transmission method, wherein the method is performed by a first node, the first node comprises X encoding units that perform encoding in a first forward error correction FEC mode, X ≥ 1, and the method comprises:
dividing to-be-encoded data into X groups of initial data;
encoding the X groups of initial data one by one by using the X encoding units, to obtain X groups of encoded data; and
distributing the X groups of encoded data to L links between the first node and a second node, to send the X groups of encoded data to the second node, wherein L ≥ 2; and
both X×N and X×K are integer multiples of L, N represents a length of a first codeword of the first FEC mode, K represents a length of valid information bits in the first codeword, and amounts of encoded data distributed to different links in the L links are the same.

2. The method according to claim 1, wherein both the first node and the second node support a plurality of FEC modes, the first FEC mode is any one of the plurality of FEC modes, and the method further comprises:
before the to-be-encoded data is divided into the X groups of initial data, if a mode switching condition is met, switching a currently-used second FEC mode in the plurality of FEC modes to the first FEC mode; and
sending an indication of the first FEC mode to the second node.

3. The method according to claim 1, wherein both the first node and the second node support a plurality of FEC modes, the first FEC mode is any one of the plurality of FEC modes, and the method further comprises:
before the to-be-encoded data is divided into the X groups of initial data, if a mode switching condition is met, switching a currently-used second FEC mode in the plurality of FEC modes to the first FEC mode, wherein the X groups of encoded data carry an indication of the first FEC mode.

4. The method according to claim 2 or 3, wherein the length of the first codeword is a first multiple of a first reference length, and the length of valid information bits in the first codeword is the first multiple of a second reference length; and
a length of a second codeword of the second FEC mode is a second multiple of the first reference length, and a length of valid information bits in the second codeword is the second multiple of the second reference length.

5. The method according to any one of claims 2 to 4, wherein the indication of the first FEC mode comprises an alignment marker AM.

6. The method according to any one of claims 2 to 5, wherein the method further comprises:
receiving a mode switching request sent by the second node; and
determining, based on the mode switching request, whether the mode switching condition is met.

7. The method according to claim 6, wherein the mode switching request carries at least one of state parameters of the L links and the indication of the first FEC mode.

8. The method according to claim 6, wherein the plurality of FEC modes all have corresponding parameter ranges, the parameter ranges corresponding to the plurality of FEC modes do not overlap with each other, and the mode switching request carries state parameters of the L links;
the determining, based on the mode switching request, whether the mode switching condition is met comprises:
when the state parameters fall outside a parameter range corresponding to the second FEC mode, determining that the mode switching condition is met; and
the method further comprises:
determining the first FEC mode based on the state parameters, wherein the state parameters fall within a parameter range corresponding to the first FEC mode.

9. The method according to any one of claims 1 to 8, wherein N is an integer multiple of 66 symbols, and K is an integer multiple of 64 symbols; or
N is an integer multiple of 34 symbols, and K is an integer multiple of 32 symbols; or
N is an integer multiple of 70 symbols, and K is an integer multiple of 64 symbols; or
N is an integer multiple of 36 symbols, and K is an integer multiple of 32 symbols; or
N is an integer multiple of 70 symbols, and K is an integer multiple of 68 symbols; or
N is an integer multiple of 36 symbols, and K is an integer multiple of 34 symbols; or
N is an integer multiple of 74 symbols, and K is an integer multiple of 68 symbols; or
N is an integer multiple of 38 symbols, and K is an integer multiple of 34 symbols; or
N is an integer multiple of 64 symbols, and K is an integer multiple of 60 symbols.

10. A data transmission method, wherein the method is performed by a second node, the second node comprises X decoding units that perform decoding in a first forward error correction FEC mode, X ≥ 1, and the method comprises:
receiving encoded data from L links between a first node and the second node, wherein L ≥ 2;
combining the encoded data received from the L links, to obtain X groups of encoded data;
decoding the X groups of encoded data one by one by using the X decoding units, to obtain X groups of initial data; and
combining the X groups of initial data, to obtain to-be-encoded data of the first node;
wherein both X×N and X×K are integer multiples of L, N represents a length of a first codeword of the first FEC mode, K represents a length of valid information bits in the first codeword, and amounts of encoded data received from different links are the same.

11. The method according to claim 10, wherein both the first node and the second node support a plurality of FEC modes, and the first FEC mode is any one of the plurality of FEC modes; and
before the combining the encoded data received from the L links, the method further comprises:
receiving an indication that is of the first FEC mode and that is sent by the first node; and
switching a currently-used second FEC mode in the plurality of FEC modes to the first FEC mode based on the indication of the first FEC mode.

12. The method according to claim 10, wherein both the first node and the second node support a plurality of FEC modes, the first FEC mode is any one of the plurality of FEC modes, and the X groups of encoded data carry an indication of the first FEC mode; and
before the combining the encoded data received from the L links, the method further comprises:
switching a currently-used second FEC mode in the plurality of FEC modes to the first FEC mode based on the indication of the first FEC mode.

13. The method according to claim 11 or 12, wherein the length of the first codeword is a first multiple of a first reference length, and the length of valid information bits in the first codeword is the first multiple of a second reference length; and
a length of a second codeword of the second FEC mode is a second multiple of the first reference length, and a length of valid information bits in the second codeword is the second multiple of the second reference length.

14. The method according to any one of claims 11 to 13, wherein the indication of the first FEC mode comprises an alignment marker AM.

15. The method according to any one of claims 11 to 14, wherein before the switching a currently-used second FEC mode in the plurality of FEC modes to the first FEC mode based on the indication of the first FEC mode, the method further comprises:
when a mode switching condition is met, sending a mode switching request to the first node.

16. The method according to claim 15, wherein the mode switching request carries state parameters of the L links and/or an identifier of the first FEC mode.

17. The method according to claim 15, wherein the plurality of FEC modes all have corresponding parameter ranges, and the parameter ranges corresponding to the plurality of FEC modes do not overlap with each other; and
before the sending a mode switching request to the first node, the method further comprises:
obtaining state parameters of the L links; and
when the state parameters fall outside a parameter range corresponding to the second FEC mode, determining that the mode switching condition is met, wherein the mode switching request carries the state parameters.

18. The method according to any one of claims 10 to 17, wherein N is an integer multiple of 66 symbols, and K is an integer multiple of 64 symbols; or
N is an integer multiple of 34 symbols, and K is an integer multiple of 32 symbols; or
N is an integer multiple of 70 symbols, and K is an integer multiple of 64 symbols; or
N is an integer multiple of 36 symbols, and K is an integer multiple of 32 symbols; or
N is an integer multiple of 70 symbols, and K is an integer multiple of 68 symbols; or
N is an integer multiple of 36 symbols, and K is an integer multiple of 34 symbols; or
N is an integer multiple of 74 symbols, and K is an integer multiple of 68 symbols; or
N is an integer multiple of 38 symbols, and K is an integer multiple of 34 symbols; or
N is an integer multiple of 64 symbols, and K is an integer multiple of 60 symbols.

19. A communications device, wherein the communications device belongs to a first node, the communications device has X encoding units that perform encoding in a first forward error correction FEC mode, X ≥ 1, and the communications device comprises:
a processing module, configured to divide to-be-encoded data into X groups of initial data;
an encoding module, configured to encode the X groups of initial data one by one by using the X encoding units, to obtain X groups of encoded data; and
a first sending module, configured to distribute the X groups of encoded data to L links between the first node and a second node, to send the X groups of encoded data to the second node, wherein L ≥ 2; and
both X×N and X×K are integer multiples of L, N represents a length of a first codeword of the first FEC mode, K represents a length of valid information bits in the first codeword, and amounts of encoded data distributed to different links in the L links are the same.

20. A communications device, wherein the communications device belongs to a second node, the communications device has X decoding units that perform decoding in a first forward error correction FEC mode, X ≥ 1, and the communications device comprises:
a first receiving module, configured to receive encoded data from L links between a first node and the second node, wherein L ≥ 2;
a first processing module, configured to combine the encoded data received from the L links, to obtain X groups of encoded data;
a decoding module, configured to decode the X groups of encoded data one by one by using the X decoding units, to obtain X groups of initial data; and
a second processing module, configured to combine the X groups of initial data, to obtain to-be-encoded data of the first node; wherein
both X×N and X×K are integer multiples of L, N represents a length of a first codeword of the first FEC mode, K represents a length of valid information bits in the first codeword, and amounts of encoded data received from different links are the same.

21. A communications device, comprising a processor and a memory, wherein the memory stores a program; and
the processor is configured to invoke the program stored in the memory, so that the communications device performs the data transmission method according to any one of claims 1 to 9.

22. A communications device, comprising a processor and a memory, wherein the memory stores a program; and
the processor is configured to invoke the program stored in the memory, so that the communications device performs the data transmission method according to any one of claims 10 to 18.

23. A communications system, comprising a first node and a second node; wherein
the first node comprises the communications device according to claim 19, and the second node comprises the communications device according to claim 20; or
the first node comprises the communications device according to claim 21, and the second node comprises the communications device according to claim 22.

24. A computer storage medium, wherein the computer storage medium stores a computer program; and
when the computer program runs on a computer, the computer is enabled to perform the data transmission method according to any one of claims 1 to 9; or
when the computer program runs on a computer, the computer is enabled to perform the data transmission method according to any one of claims 10 to 18.

25. A computer program product, wherein when the computer program product runs on a communications device, the communications device is enabled to perform the data transmission method according to any one of claims 1 to 9; or when the computer program product runs on a communications device, the communications device performs the data transmission method according to any one of claims 10 to 18.
